(19) Europäisches Patentamt European Patent Office Office européen des brevets

(11) **EP 4 364 102 B1**

(12) **EUROPEAN PATENT SPECIFICATION**

(45) Date of publication and mention of the grant of the patent:
**05.08.2026 Bulletin 2026/32**

(21) Application number: **21737648.2**

(22) Date of filing: **29.06.2021**

(51) International Patent Classification (IPC):
*G06V 10/82* (2022.01)       *G06F 18/213* (2023.01)
*G06F 18/22* (2023.01)

(52) Cooperative Patent Classification (CPC):
**G06V 10/82; G06F 18/213; G06F 18/22;**
G06V 2201/03

(86) International application number:
**PCT/EP2021/067878**

(87) International publication number:
**WO 2023/274512 (05.01.2023 Gazette 2023/01)**

(54) **METHOD FOR TRAINING AND USING A DEEP LEARNING ALGORITHM TO COMPARE MEDICAL IMAGES BASED ON DIMENSIONALITY-REDUCED REPRESENTATIONS**

VERFAHREN ZUM TRAINIEREN UND VERWENDUNG EINES TIEFENLERNALGORITHMUS ZUM VERGLEICH MEDIZINISCHER BILDER AUF DER BASIS VON DIMENSIONALITÄTSREDUZIERTEN DARSTELLUNGEN

PROCÉDÉ D'APPRENTISSAGE ET D'UTILISATION D'UN ALGORITHME D'APPRENTISSAGE PROFOND POUR COMPARER DES IMAGES MÉDICALES SUR LA BASE DE REPRÉSENTATIONS À DIMENSIONNALITÉ RÉDUITE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**08.05.2024 Bulletin 2024/19**

(73) Proprietor: **Brainlab SE**
**81829 München (DE)**

(72) Inventors:
• **MOSER, Christoph**
**81829 Munich (DE)**
• **BRIEU, Nicolas**
**81829 Munich (DE)**
• **LIU, Qianyu**
**81829 Munich (DE)**
• **PUCH GINER, Santiago**
**81829 Munich (DE)**

(74) Representative: **SSM Sandmair**
**Patentanwälte Rechtsanwalt**
**Partnerschaft mbB**
**Joseph-Wild-Straße 20**
**81829 München (DE)**

(56) References cited:
**US-A1- 2010 329 529**

• **GHASSAN HAMARNEH ET AL: "Perception-Based Visualization of Manifold-Valued Medical Images Using Distance-Preserving Dimensionality Reduction", IEEE TRANSACTIONS ON MEDICAL IMAGING, IEEE, USA, vol. 30, no. 7, 1 July 2011 (2011-07-01), pages 1314 - 1327, XP011356982, ISSN: 0278-0062, DOI: 10.1109/TMI.2011.2111422**
• **"A Meta-Classifier for Detecting Prostate Cancer by Quantitative Integration of In Vivo Magnetic Resonance Spectroscopy and Magnetic Resonance Imaging", MEDICAL IMAGING 2008: COMPUTER-AIDED DIAGNOSIS, 17 March 2008 (2008-03-17), XP040435015**

- **TIWARI PALLAVI ET AL: "Consensus-Locally Linear Embedding (C-LLE): Application to Prostate Cancer Detection on Magnetic Resonance Spectroscopy", 6 September 2008, ADVANCES IN BIOMETRICS : INTERNATIONAL CONFERENCE, ICB 2007, SEOUL, KOREA, AUGUST 27 - 29, 2007 ; PROCEEDINGS; [LECTURE NOTES IN COMPUTER SCIENCE; LECT.NOTES COMPUTER], SPRINGER, BERLIN, HEIDELBERG, PAGE(S) 330 - 338, ISBN: 978-3-540-74549-5, XP047462376**

- **G. E. HINTON ET AL: "Reducing the Dimensionality of Data with Neural Networks", SCIENCE, vol. 313, no. 5786, 28 July 2006 (2006-07-28), US, pages 504 - 507, XP055313000, ISSN: 0036-8075, DOI: 10.1126/science.1127647**

**Description**

**FIELD OF THE INVENTION**

The present invention relates i.a. to a computer-implemented method of determining a similarity between medical images, a corresponding computer program, a computer-readable storage medium storing such a program and a computer executing the program, as well as a system comprising an electronic data storage device and the aforementioned computer.

**TECHNICAL BACKGROUND**

In medical image database management, it is often the case that a new medical image is entered into a database. It then is desirable to find images in the database which are similar to the new image or originate from the same patient, while avoiding the need for storing, in association with the images, a patient identifier as metadata.

The present invention has the object of providing methods and a system for supporting grouping of medical images according to their similarity or origin from the same patient.

Aspects of the present invention, examples and exemplary steps and their embodiments are disclosed in the following. Different exemplary features of the invention can be combined in accordance with the appended claims wherever technically expedient and feasible.

US 2010/329529 A1 discloses an approach for using dimensionality reduction based on clustering image features into classes and using the learning algorithm to identify cluster spectra corresponding to cancer on prostate magnetic resonance imaging data.

GHASSAN HAMARNET ET AL: "Perception-Based Visualization of Manifold-Valued Medical Images Using Distance-Preserving Dimensionality Reduction", IEEE TRANSACTIONS ON MEDICAL IMAGING, IEEE, USA, vol. 30 no. 7, 1 July 2022 (2011-07-01), pages 1314-1327, XP011356982, ISSN: 0278-0062, DOI: 10.1109/TMI.2011.2111422 discloses determining a dissimilarity between magnetic resonance image pixels via a log-Eucledean Riemanniann metric respecting a manifold of rank 3.

Viswanath, S. et al. "A Meta-Classifier for Detecting Prostate Cancer by Quantitative Integration of In Vivo Magnetic Resonance Spectroscopy and Magnetic Resonance Imaging, Medical Imaging 2008: Computer-Aided Diagnosis, proceedings of SPIE, vol. 6915, 69153 D, (2008), DOI: 10.1117/12.71022 discloses a scheme to develop a meta-classifier to detect CaP in vivo via quantitative integration of multi model prostate magnetic resonance imaging data by use of non-linear dimensionality reduction methods including spectro clustering and locally linear embedding.

TIWARI PALLAVI ET AL: "Consensus-Locally Linear Embedding (C-LLE): Application to Prostate Cancer Detection on Magnetic Resonance Spectroscopy", 6 September 2008 (2008-09-06), ADVANCES IN BIOMETRICS: INTERNATIONAL CONFERENCE, ICB 2007, SEOUL, KOREA, AUGUST 27-29, 2007; PROCEEDINGS; [LECTURE NOTES IN COMPUTER SCIENCE; LECT.NOTES COMPUTER], SPRINGER, BERLIN, HEIDELBERG, PAGE(S) 330-338, XP047462376, ISBN: 978-3-540,74549-5 discloses use of locally liner embedding for non-linear dimensionality reduction to detect prostate cancer in magnetic resonance imaging data.

**EXEMPLARY SHORT DESCRIPTION OF THE INVENTION**

In the following, a short description of the specific features of the present invention is given which shall not be understood to limit the invention only to the features or a combination of the features described in this section. The invention is carried out according to the appended claims.

The disclosed method encompasses determining patches, i.e. subsets, of a medical image which is newly input to a data storage and of medical images which has been previously stored, analysing the patches for similar image features in a dimensionality-reduced reference system used for defining the image features, computing a distance between the image features in the dimensionality-reduced reference system, and based on the result of comparing the distances calculated for the newly input image and the previously stored medical images, determining whether the medical images are similar and for example originate from the same patient. The dimensionality-reduced reference system is also called "latent space", "embedding space" or "feature space" and is used as a reference system for defining the dimensionality-reduced representation of the image data. The dimensionality-reduced representation of the image data can be embodied by a vector that is defined in the dimensionality-reduced reference system which serves as a vector space. Artificial intelligence is used to generate the dimensionality-reduced representation of the image features, i.e. to encode the medical images for further processing by the methods and the system disclosed herein.

## GENERAL DESCRIPTION OF THE INVENTION

In this section, a description of the general features of the present invention is given for example by referring to possible embodiments of the invention. The invention is carried out according to the appended claims.

As part of a solution for reaching the aforementioned object, the present disclosure encompasses, in a first aspect, a computer-implemented medical method of training a trainable algorithm to determine a correspondence between a subset of a medical image and a dimensionality-reduced representation of the subset. The method according to the first aspect comprises executing, on at least one processor of at least one computer (for example at least one computer being part of a navigation system), the following exemplary steps which are executed by the at least one processor.

In a (for example first) step of the method according to the first aspect, training image subset data is acquired which describes subsets of a training medical image. For example, each subset constitutes a patch taken from the training medical image.

In a (for example second) step of the method according to the first aspect, transformation data is determined which describes a transformation between the training image positional reference system in which positions in the medical image are defined and a comparative reference system which is different from the training image reference system.

In a (for example third) step of the method according to the first aspect, first distance data is determined based on the training image subset data and the transformation data, wherein the first distance data describes a distance between the subsets in the comparative reference system. For example, the first distance data is determined as a Euclidean distance between the positions of the subsets in the comparative reference system. In an example, the distance can be based on an anatomical vector, for example the norm and for example an angle or another function of a vector pointing to a point in an atlas space or as a vector pointing from a first position to a second position in the atlas space.

In a (for example fourth) step of the method according to the first aspect, reduced representation data is determined by encoding the training image subset data, wherein the reduced representation data describes a dimensionality-reduced representation of each of the subsets in a dimensionality-reduced reference system which is reduced in dimensionality compared to the dimensionality of the training image reference system.

In a (for example fifth) step of the method according to the first aspect, second distance data is determined based on the reduced representation data, wherein the second distance data describes a distance between the dimensionality-reduced representations in the dimensionality-reduced reference system. For example, the second distance data is determined as a Euclidean distance between the positions of the subsets in the dimensionality-reduced reference system. In an example, the distance can be based on an anatomical vector, for example the norm and for example an angle or another function of a vector pointing to a point in an atlas space or as a vector pointing from a first position to a second position in the atlas space.

In a (for example sixth) step of the method according to the first aspect, algorithm parameter data is determined which describes parameters of a trainable algorithm, wherein the algorithm parameter data is determined, for example iteratively determined, based on the first distance data and the second distance data, thereby adjusting the parameters to reflect that the lower-dimensional representations correspond to the subsets of the training medical image if the distance between the dimensionality-reduced representations corresponds to the distance between the subsets in the comparative reference system.

In an example of the method according to the first aspect, atlas data is acquired which describes a digital model of an anatomical body part, wherein the comparative reference system describes positions in the digital model. The digital model is defined for example by tissue classes which define a response of human body tissue to a medical imaging modality and are defined for example by colour, for example greyscale, values, for example by Hounsfield units. Alternatively or additionally, the digital model is defined as an anisotropy model which defines the anisotropy of the response of the body tissue to magnetic resonance imaging. For example, the subsets are transformed into the reference system in which positions in the digital model are defined, and the first distance data is determined in that reference system, wherein a distance of at least substantially zero indicates and/or an overlap (for example, a predetermined amount of overlap) of the subsets with a certain anatomical object in the digital model an identity of the subsets.

In a further exemplary step of the method according to the first aspect, feature distribution data is determined which describes, for each of the subsets, a distribution of image features of the respective subset onto different classes. A difference between the distributions is determined based on the feature distribution data. To compute the distance between two subsets, for example the overlap of each subset with each of the classes defined in the digital model (atlas) is estimated. The distance between the two subsets is then defined by the difference of the respective overlaps with the classes in the digital model. The first distance data is then determined based on the difference between the distributions. For example, the distance described by the first distance data is defined as the difference between the distributions. The distribution can be embodied by a histogram of the features, and the classes of the histogram can be defined by a similar area, volume, maximum extension for example in a predetermined ratio or an aspect ratio of the features. For example, the method according to the first aspect includes a step of acquiring the atlas data, and the classes then for example define anatomical structures segmented in the digital model.

In a second aspect, the present disclosure relates to a computer-implemented medical method of determining dimensionality-reduced representations of subsets of a medical image. The method according to the second aspect comprises executing, on at least one processor of at least one computer (for example at least one computer being part of a navigation system), the following exemplary steps which are executed by the at least one processor.

In a (for example first) step of the method according to the second aspect, medical image subset data is acquired which describes subsets of the medical image. The subsets are for example strict (also known as true) subsets of the medical image, i.e. comprise less image information than the medical image.

In a (for example second) step of the method according to the second aspect, reduced representation data is determined by inputting the medical image subset data into a trainable algorithm configured to determine the dimensionality-reduced representations and causing the trainable algorithm to determine dimensionality-reduced representations. For example, the trainable algorithm has been configured to determine the dimensionality-reduced representations by executing the method according to the first aspect.

In a further exemplary step of the method according to the second aspect, medical image data is acquired which describes the medical image. In this example, the image subset data is determined by extracting, from the medical image data, the subsets.

In a further exemplary step of the method according to the second aspect, cluster data is determined which describes clusters of the lower-dimensional representations of the subsets. For example, the cluster data is determined by grouping the dimensionality-reduced representations of the subsets from the medical image data by applying a cluster analysis algorithm, for example a cluster analysis algorithm which uses centroid-based clustering, distribution-based clustering, density-based clustering or grid-based clustering.

In examples of the method according to the second aspect, the subsets are extracted from the medical image data by applying at least one of the following criteria:

- each of the subsets comprises only units of the medical image which have no more than a predetermined distance from each other;
- no more than a predetermined amount of each of the subsets includes black image content;
- each of the subsets has a predetermined size (e.g. number of pixels or voxels or a predetermined size in a specific dimension and/or direction);
- an overlap of each of the subsets with a spatially neighbouring subset does not exceed a predetermined percentage of the size of each of the subsets.

In a third aspect, the present disclosure relates to a computer-implemented method of determining a similarity between medical images. The method according to the third aspect comprises executing, on at least one processor of at least one computer (for example at least one computer being part of a navigation system), the following exemplary steps which are executed by the at least one processor.

In a (for example first) step of the method according to the third aspect, the method according to the second aspect is executed. In this step, the medical image subset data describes a reference medical image. In other words, a bag of words is determined for a first one of the medical images called reference medical image. A bag of words is essentially defined to be a representation of an entity by percentages of its constituents, in this case he subsets of medical images that belong to the respective cluster.

In a (for example second) step of the method according to the third aspect, the method according to the second aspect is executed. In this step, the medical image subset data describes a comparative medical image. In other words, a bag of words is determined for a second one of the medical images called comparative medical image.

In a (for example third) step of the method according to the third aspect, reference cluster distribution data is determined based on the subset cluster data determined for the reference medical image. The reference cluster distribution data describes a reference distribution of the dimensionality-reduced representations of the subsets of the reference medical image on anatomical regions.

In a (for example fourth) step of the method according to the third aspect, comparative cluster distribution data is determined based on the subset cluster data determined for the comparative medical image. The comparative cluster distribution data describes a comparative distribution of the dimensionality-reduced representations of the subsets of the comparative medical image on anatomical regions.

In a (for example fifth) step of the method according to the third aspect, distribution similarity data is determined based on the reference cluster distribution data and the comparative cluster distribution data. The distribution similarity data describes a similarity (specifically, indicates a value of a measure of similarity) between the reference distribution and the comparative distribution. If the distribution similarity data indicates that the similarity is high, then it is assumed that the reference medical image and the comparative medical image originate from the same patient.

In an example, determining the distribution similarity data comprises:

- acquiring difference threshold data describing a predetermined value of the difference;
- determining, based on the reference cluster distribution data and the comparative cluster distribution data, distribution difference data describing a difference, e.g. a distance, between the reference distribution and the comparative distribution;
- determining the distribution similarity data based on the distribution difference data and the difference threshold data.

This example comprises the following further optional steps:

- comparing the difference to the threshold distance; and
- determining that the reference medical image and the comparative medical image are similar to each other if the difference is not greater than the threshold distance.

In a further embodiment of this example, the distribution similarity data is determined by performing a k-nearest neighbours search that outputs a predetermined number of, for example five, comparative medical images that are the closest to the reference image.

In examples of the method according to the first, second or third aspect, the trainable algorithm comprises or consists of a machine-trainable algorithm, e.g. a machine learning algorithm, or a convolutional neural network. For example, the parameters define the learnable parameters, for example weights, of the trainable algorithm. The trainable algorithm is configured to compute a loss function by applying a triplet network approach to minimize the distance between the dimensionality-reduced representations in the dimensionality-reduced reference system for determining whether the lower-dimensional representations correspond to the subsets of the training medical image if the distance between the dimensionality-reduced representations corresponds to the distance between the subsets in the comparative reference system.

In a fourth aspect, the present disclosure relates to a program which, when running on a computer or when loaded onto a computer, causes the computer to perform the method steps of the method according to the first, second or third aspect. A computer program stored on a disc is a data file, and when the file is read out and transmitted it becomes a data stream for example in the form of a (physical, for example electrical, for example technically generated) signal. The signal wave is in one example a data carrier signal carrying the aforementioned computer program.

In a fifth aspect, the present disclosure relates to a for example non-transitory or non-volatile computer-readable program storage medium on which the program according to the fourth aspect is stored or a program storage medium on which data defining the model parameters and the architecture of a learning algorithm which has been trained by executing the method according to the second aspect are stored.

In a sixth aspect, the present disclosure relates to a data carrier signal carrying the program according to the fourth aspect and/ or a data carrier signal carrying data defining the model parameters and the architecture of a learning algorithm which has been trained by executing the method according to the first aspect. The signal can be implemented as the signal wave, for example as an electromagnetic carrier wave. For example, the signal, for example the signal wave is constituted to be transmitted via a computer network, for example LAN, WLAN, WAN, mobile network, for example the internet. For example, the signal, for example the signal wave, is constituted to be transmitted by optic or acoustic data transmission. The data carrier signal can be embodied by a (physical, for example electrical, for example technically generated) signal wave, for example a digital signal wave, such as an electromagnetic carrier wave carrying information which represents the program according to the fourth aspect, which for example comprises code means which are adapted to perform any or all of the steps of the method according to the first, second or third aspect.

In a seventh aspect, the present disclosure relates to a data stream which carries the program according to the fourth aspect and/or a data stream which carries data defining the model parameters and the architecture of a learning algorithm which has been trained by executing the method according to the first aspect.

In an eighth aspect, the present disclosure relates to at least one computer comprising at least one processor and a memory, wherein the program according to the fourth aspect is running on the at least one processor or loaded into the memory of the computer.

In a ninth aspect, the present disclosure relates to a system for determining a similarity between medical images, comprising:

   a) the at least one computer according to the seventh aspect;
   b) at least one electronic data storage device storing the medical image subset data; and
   c) the program storage medium according to the fourth aspect,
   wherein the at least one computer is operably coupled to

   - the at least one electronic data storage device for acquiring, from the at least one electronic data storage device, the medical image subset data, and for storing, in the at least one electronic data storage device, at least the distribution similarity data; and

- the program storage medium for acquiring, from the program storage medium, the data defining the parameters and the architecture of the trainable algorithm.

The present disclosure also relates to the use of the system according to the eighth aspect or any embodiment thereof for determining a similarity between medical images. The use comprises for example using the system to execute the method according to third aspect.

According to Antonio Criminisi, Jamie Shotton, Ender Konukoglu: "Decision Forests: A Unified Framework for Classification, Regression, Density Estimation, Manifold Learning and Semi-Supervised Learning" (2011), https://www. microsoft.com/en-us/research/wp-content/uploads/2016/02/CriminisiForests_FoundTrends_2011.pdf, random forests can be explained as follows:

"Random forests are an ensemble learning method for classification or regression that operates by constructing a multitude of decision trees at training time and outputting the class that is the mode of the classes (classification) or mean prediction (regression) of the individual trees.

The basic building block of a random forest is a single decision tree. A decision tree is a set of questions organized in a hierarchical manner and represented graphically as a tree. A decision tree estimates an unknown property (the "label") of an object by asking successive questions about its known properties (the so-called "features").

medical imaging methods are performed by the analytical devices. Examples for medical imaging modalities applied by medical imaging methods are: X-ray radiography, magnetic resonance imaging, medical ultrasonography or called "leaf-node"). Each question corresponds to an internal node (so-called "split-node") of the tree.

Each split node has associated to it a so-called test function. We formulate a test function at a split node j as a function with binary outputs

$$h\big(\boldsymbol{v}, \boldsymbol{\theta}_j\big): \mathcal{F} \times \mathcal{T} \to \{0,1\},$$

where 0 and 1 can be interpreted as "false" and "true" respectively, $\theta_{\mathbf{j}} \in \mathcal{T}$ denote the parameters of the test function at the j-th split node.

**v** thereby is the current object ("data point") denoted by a vector $\mathbf{v}=(x_1, x_2, ..., x_d) \in \mathcal{F}$, where the components $x_i$ represent some attributes of the data point (the features), all of which form the Feature space $\mathcal{F}$.

In the simplest form, the test function is a linear model which selects one feature axis in the feature space and classifies each data point according to whether the value of the respective feature is below or above a learnable threshold. Other more complex, non-linear test functions are possible.

In order to train a decision tree, a set of training data points is used for which both the features as well as the desired label are known. The goal of the training is to automatically learn suitable test functions at all the split-nodes which are best suited to determine the label from the features of a data point. Later on, such a trained decision tree can then be evaluated for a new data point with unknown label by sending the data point through the trained tree based on its features.

For understanding the training procedure, it is useful to denote subsets of training points as being associated with different tree branches. For instance $S_1$ denotes the subset of training points reaching node 1 (nodes are numbered in breadth-first order starting from 0 for the root F, and $S_1^L, S_1^R$ denote the subsets going to the left and to the right children of node 1, respectively.

The training takes care of selecting the type and parameters of the test function $h(v, \theta_{\mathbf{j}})$ associated with each split node (indexed by j) by optimizing a chosen objective function defined on an available training set.

The optimization of the split functions proceeds in a greedy manner. At each node j, depending on the subset of the incoming training set $S_j$ we learn the function that "best" splits $S_j$ into $S_j^R$ and $S_j^L$. This problem is formulated as the maximization of an objective function at that node

$$\boldsymbol{\Theta}_{\boldsymbol{j}}^* = arg\,max_{\boldsymbol{\theta}_j \in \mathcal{T}}\,I_j$$

with

$$I_j = I\left(S_j, S_j^L, S_j^R, \boldsymbol{\theta}_j\right)$$

$$S_j^L = \left\{(v, y) \in S_j \big| h(\boldsymbol{v}, \boldsymbol{\theta}_j) = 0\right\}$$

$$S_j^R = \left\{(v, y) \in S_j \big| h(\boldsymbol{v}, \boldsymbol{\theta}_j) = 1\right\}$$

As before, the symbols $S_j$, $S_j^L$, $S_j^R$ denote the sets of training points before and after the spit. The objective function is of an abstract form here. Its precise definition and the meaning of "best" depends on the task at hand (e.g., supervised or not, continuous or discrete output). For instance, for binary classification, the term "best" can be defined as splitting the training subset $S_j$ such that the resulting child nodes are as pure as possible, that is, containing only training points of a single class. In this case the objective function can, for instance, be defined as the information gain.

During training we also need to optimize the tree structure (shape). Training starts at the root node, j = 0, where the optimum split parameters are found as described earlier. Thus, we construct two child nodes, each receiving a different disjoint subset of the training set. This procedure is then applied to all the newly constructed nodes and the training phase continues. The structure of the tree depends on how and when we decide to stop growing various branches of the tree. Diverse stopping criteria can be applied. For example it is common to stop the tree when a maximum number of levels D has been reached. Alternatively, one can impose a minimum value of the maximum $max_{\theta_j} I_j$, in other words we stop when the sought for attributes of the training points within the leaf node are similar to one another. Tree growing may also be stopped when a node contains too few training points. Avoiding growing full trees has been demonstrated to have positive effects in terms of generalization.

During training, randomness is injected into the trees: Instead of optimizing over the whole parameter space of the test functions, when training at the j-th node we only make available a small random subset $\mathcal{T}_j \in \mathcal{T}$ of parameter values. Thus under the randomness model training a tree is achieved by optimizing each split node j by

$$\boldsymbol{\Theta}_j^* = arg\,max_{\boldsymbol{\theta}_j \in \mathcal{T}_j} I_j.$$

Due to this randomized setup, multiple decision trees can later be trained in parallel, each exploiting a different sets of properties from a data point.

At the end of the training phase we obtain: (i) the (greedily) optimum weak learners associated with each node, (ii) a learned tree structure, and (iii) a different set of training points at each leaf.

After training, each leaf node remains associated with a subset of (labelled) training data. During testing, a previously unseen point traverses the tree until it reaches a leaf. Since the split nodes act on features, the input test point is likely to end up in a leaf associated with training points which are all similar to itself. Thus, it is reasonable to assume that the associated label must also be similar to that of the training points in that leaf. This justifies using the label statistics gathered in that leaf to predict the label associated with the input test point.

In the most general sense the leaf statistics can be captured using the posterior distributions

$$p(c|\mathbf{v}) \quad and \quad p(y|\mathbf{v}),$$

where c and y represent the discrete or continuous labels, respectively. $\mathbf{v}$ is the data point that is tested in the tree and the conditioning denotes the fact that the distributions depend on the specific leaf node reached by the test point. Different leaf predictors can be used. For instance, a Maximum A-Posteriori (MAP) estimate may be obtained as $c^* = arg\,max_c p(c|\mathbf{v})$, in the discrete case.

Based on the above construction principle for decision trees, we can now proceed to decision forests, also called random forests:

A random decision forest is an ensemble of randomly trained decisions trees. The key aspect of the forest model is the fact that its component trees are all randomly different from one another. This leads to decorrelation between the individual tree predictions and, in turn, results in improved generalization and robustness.

In a forest with T trees we use the variable $t \in \{1, ..., T\}$ to index each component tree. All trees are trained independently (and possibly in parallel). During testing, each test point $\mathbf{v}$ is simultaneously pushed through all trees (starting at the root) until it reaches the corresponding leaves. Tree testing can also often be done in parallel, thus achieving high computational efficiency on modern parallel CPU or GPU hardware. Combining all tree predictions into a single forest prediction may be done by a simple averaging operation. For instance, in classification

$$p(c|\mathbf{v}) = \frac{1}{T}\sum_{t=1}^{T} p_t(c|\mathbf{v}),$$

where $p_t(c|\mathbf{v})$ denotes the posterior distribution obtained by the tth tree. Alternatively one could also multiply the tree outputs together (though the trees are not statistically independent)

$$p(c|\mathbf{v}) = \frac{1}{Z}\prod_{t=1}^{T} Pt(c|\mathbf{v})$$

with the partition function Z ensuring probabilistic normalization."

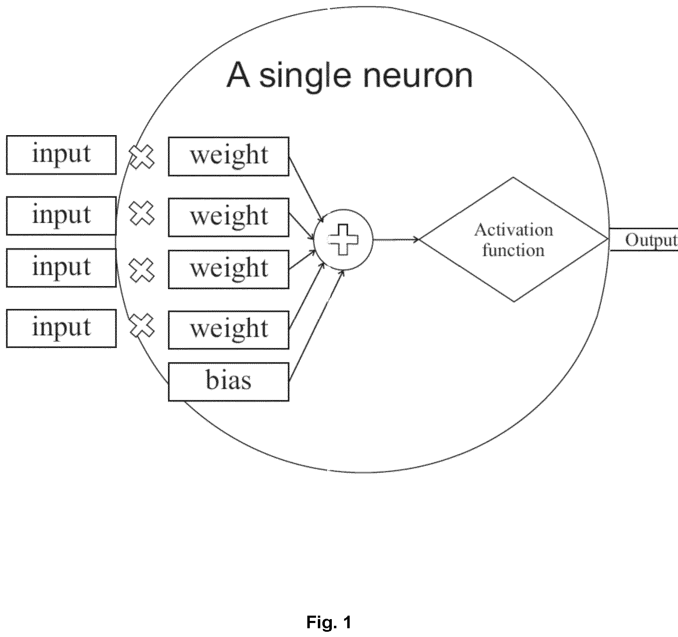

In the following, an explanation of convolutional neural networks as an example of the machine learning algorithm to be used with the disclosed invention is provided with reference to Fig. 1.

Convolutional networks, also known as convolutional neural networks, or CNNs, are an example of neural networks for processing data that has a known grid-like topology. Examples include time-series data, which can be thought of as a 1-D grid taking samples at regular time intervals, and image data, which can be thought of as a 2-D or 3-D grid of pixels. The name "convolutional neural network" indicates that the network employs the mathematical operation of convolution. Convolution is a linear operation. Convolutional networks are simply neural networks that use convolution in place of general matrix multiplication in at least one of their layers. There are several variants on the convolution function that are widely used in practice for neural networks. In general, the operation used in a convolutional neural network does not correspond precisely to the definition of convolution as used in other fields, such as engineering or pure mathematics.

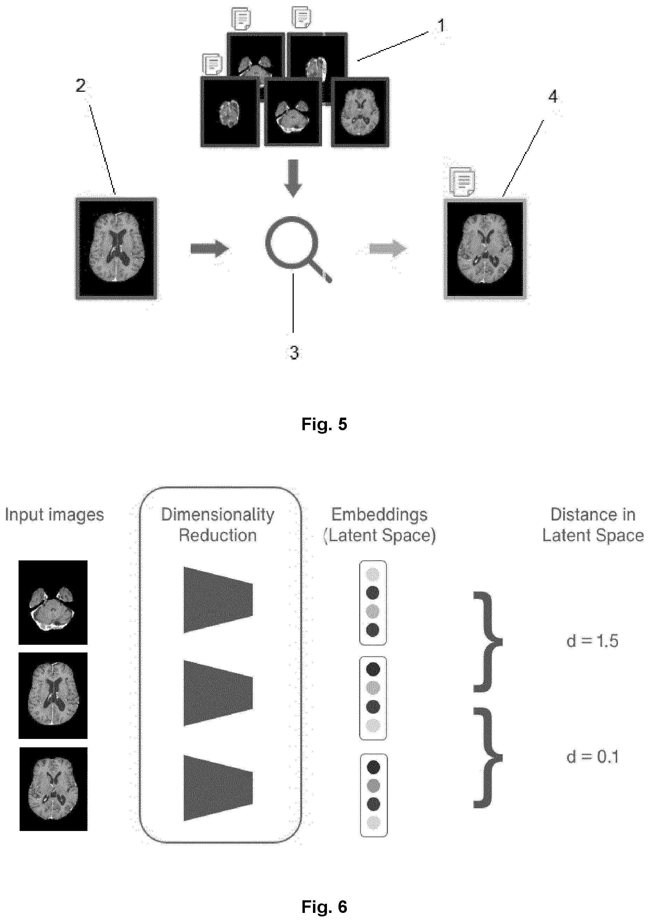

The main component of convolutional neural networks are artificial neurons. Figure 6 is an example of a single neuron depicted. The node in the middle represents a neuron, which takes all inputs ($x_1$, ..., $x_n$) and multiplies them with their specific weights ($w_1$, ..., $w_n$) The importance of the input depends on the value of its weight. The addition of these computed values is called weighted sum which will be inserted into an activation function. The weighted sum z is defined as:

$$z = \sum_{i=0}^{n} x_i \cdot w_i \qquad (1)$$

The bias b is an input-independent value which modifies the boundaries of the threshold. The resulting value is processed by an activation function which decides whether the input will be transferred to the next neuron.

A CNN usually takes an order 1 or 3 tensor as its input, e.g., an image with H rows, W columns, and 3 channels (R, G, B colour channels). Higher order tensor inputs, however, can be handled by CNN in a similar fashion. The input then sequentially goes through a series of processing. One processing step is usually called a layer, which could be a convolution layer, a pooling layer, a normalization layer, a fully connected layer, a loss layer, etc. Details of the layers are described in the sections below.

$$x^1 \rightarrow \boxed{w^1} \rightarrow x^2 \rightarrow \cdots \rightarrow x^{L-1} \rightarrow \boxed{w^{L-1}} \rightarrow x^L \rightarrow \boxed{w^L} \rightarrow z \qquad (1)$$

The above equation 5 illustrates how a CNN runs layer by layer in a forward pass. The input is $x^1$, usually an image (order 1 or 3 tensor). We note the parameters involved in the processing of the first layer collectively as a tensor $w^i$. The output of the first layer is $x^2$, which also acts as the input to the second layer processing. This processing proceeds until processing of all layers in the CNN has been finished, which outputs $x^L$. One additional layer, however, is added for backward error propagation, a method that leans good parameter values in the CNN. Suppose the problem at hand is an image classification problem with C classes. A commonly used strategy is to output $x^L$ as a C-dimensional vector, the i-th entry of which encodes the prediction (posterior probability that $x^1$ comes from the i-th class). To make $x^L$ a probability mass function, we can set the processing in the (L - 1)-th layer as a softmax transformation of $x^{L-1}$. In other applications, the output $x^L$ may have other forms and interpretations. The last layer is a loss layer. Let us suppose t is the corresponding target (ground-truth) value for the input $x^1$, then a cost or loss function can be used to measure the discrepancy between the CNN prediction $x^L$ and the target t. Note that some layers may not have any parameters, that is, $w^i$ may be empty for some i.

In an example of a CNN, ReLu is used as an activation function for the convolutional layers and the softmax activation function provides information in order to give an classification output. The following sections will explain the purpose of the most important layers.

An input image is input to a feature learning section of a layer comprising convolution and ReLu, followed by a layer comprising pooling, which is followed by further pairwise repetitions of layers of convolution and ReLu and of pooling. The output of the feature learning section is input to a classification section which comprises layers directed to flattening, fully connecting and softmaxing.

In a convolutional layer, multiple convolution kernels are usually used. Assuming D kernels are used and each kernel is of spatial span H x W, we denote all the kernels as f. f is an order 4 tensor in $\mathbb{R}^{H \times W \times D^l \times D}$. Similarly, we use index variables $0 \leq i < H$, $0 \leq j < W$, $0 \leq d^l < D^l$ and $0 \leq d < D$ to pinpoint a specific element in the kernels. Also note that the set of kernels f refers to the same object as the notation $w^L$ above. We change the notation a bit to simplify the derivation. It is also clear that even if the mini-batch strategy is used, the kernels remain unchanged.

The spatial extent of the output is smaller than that of the input so long as the convolution kernel is larger than 1 x 1. Sometimes we need the input and output images to have the same height and width, and a simple padding trick can be used

For every channel of the input, if we pad (i.e., insert) $\left\lfloor \frac{H-1}{2} \right\rfloor$ rows above the first row and $\left\lfloor \frac{H}{2} \right\rfloor$ rows below the last row, and paid $\left\lfloor \frac{W-1}{2} \right\rfloor$ columns the left of the first column and $\left\lfloor \frac{W}{2} \right\rfloor$ columns to the right of the last column of the input, the convolution output will be $H^l \times W^l \times D$ in size, i.e. having the same spatial extent as the input. $\lfloor * \rfloor$ is the floor function. Elements of the padded rows and columns are usually set to 0, but other values are also possible.

Stride is another important concept in convolution. A kernel is convolved with the input at every possible spatial location, which corresponds to the stride s = 1. However, if s > 1, every movement of the kernel skip s - 1 pixel locations (i.e., the convolution is performed once every s pixel both horizontally and vertically).

In this section, we consider the simple case when the stride is 1 and no padding is used. Hence, we have y (or $x^{l+1}$) in $\mathbb{R}^{H^{l+1} \times W^{l+1} \times D^{l+1}}$, with $H^{l+1} = H^l - H + 1$, $W^{l+1} = W^l - W + 1$, and $D^{l+1} = D$. In precise mathematics, the convolution procedure can be expressed as an equation:

$$y_{i^{l+1}, j^{l+1}, d} = \sum_{i=0}^{H} \sum_{j=0}^{W} \sum_{d^l=0}^{D^l} f_{i,j,d^l,d} \times x^l_{i^{l+1}+i, j^{l+1}+j, d^l} \qquad (2)$$

Equation 2 is repeated for all $0 \leq d \leq D = D^{l+1}$, and for any spatial location $(i^{l+1}, j^{l+1})$ satisfying $0 \leq i^{l+1} < H^l - H + 1 = H^{l+1}$, $0 \leq j^{l+1} < W - W + 1 = W^{l+1}$. In this equation, $x^l_{i^{l+1}+i, j^{l+1}+j, d^l}$ refers to the element of $x^l$ indexed by the triplet $(i^{l+1}+i, j^{l+1}+j, d^l)$. A bias term $b_d$ is usually added to $y_{i_l+1, j_l+1, d}$. We omit this term in this note for clearer presentation.

A pooling function replaces the output of the net at a certain location with a summary statistic of the nearby outputs. For example, a max pooling operation reports the maximum output within a rectangular neighbourhood of a table. Other popular pooling functions include the average of a rectangular neighbourhood, the $L_2$ norm of a rectangular neighbourhood, or a weighted average based on the distance from the central pixel. In all cases, pooling helps to make the representation approximately invariant to small translations of the input. Invariance to translation means that if we translate the input by a small amount, the values of the pooled outputs do not change.

Because pooling summarizes the responses over a whole neighbourhood, it is possible to use fewer pooling units than detector units, by reporting summary statistics for pooling regions spaced k pixels apart rather than one pixel apart. This improves the computational efficiency of the network because the next layer has roughly k times fewer inputs to process.

Suppose all the parameters of a CNN model $w^1$, ..., $w^{L-1}$ have been learned, then we are ready to use this model for prediction. Prediction only involves running the CNN model forward, i.e., in the direction of the arrows in equation 1. Take the image classification problem as an example. Starting from the input $x^1$, we make it pass the processing of the first layer (the box with parameters $w^1$), and get $x^2$. In turn, $x^2$ is passed into the second layer, etc. Finally, we receive $x^l \in \mathbb{R}^C$, which estimates the posterior probabilities of $x^1$ belonging to the C categories. We can output the CNN prediction as:

$$arg_i \, max \, x^L_i \qquad (3)$$

Now, the problem is: how do we learn the model parameters?

As in many other learning systems, the parameters of a CNN model are optimized to minimize the loss z, i.e. we want the prediction of a CNN model to match the ground-truth labels. Suppose one training example $x^1$ is given for training such parameters. The training process involves running the CNN network in both directions. We first run the network in the forward pass to get $x^L$ to achieve a prediction using the current CNN parameters. Instead of outputting a prediction, we need to compare the prediction with the target t corresponding to $x^1$, i.e. continue running the forward pass till the last loss layer. Finally, we achieve a loss z. The loss z is then a supervision signal, guiding how the parameters of the model should be modified (updated).

There exist several algorithms for optimizing a loss function and CNNs are not limited to a specific one. An example algorithm is called Stochastic Gradient Descent (SGD). This means the parameters are updated by using the gradient estimated from a (usually) small subset of training examples.

$$w^i \longleftarrow w^i - \eta \frac{\delta z}{\delta w^i} \qquad (4)$$

In equation 4, the $\longleftarrow$ - sign implicitly indicates that the parameters $w^i$ (of the i-layer) are updated from time t to t + 1. If a time index t is explicitly used, this equation will look like

$$(w^i)^{t+1} = (w^i)^t - \eta \frac{\delta z}{\delta (w^i)^t} \qquad (5)$$

In equation 4, the partial derivative $\frac{\delta z}{\delta w^i}$ measures the rate of increase of z with respect to the changes in different dimensions of $w^i$. This partial derivative vector is called the gradient in mathematical optimization. Hence, in a small local region around the current value of $w^i$, to move $w^i$ in the direction determined by the gradient will increase the objective value z. In order to minimize the loss function, we should update $w^i$ along the opposite direction of the gradient. This updating rule is called the gradient descent.

If we move too far in the negative gradient direction, however, the loss function may increase. Hence, in every update we only change the parameters by a small proportion of the negative gradient, controlled by $\eta$ (the learning rate). $\eta$ > 0 is usually set to a small number (e.g., $\eta$ = 0.001). One update based on $x^1$ will make the loss smaller for this particular training example if the learning rate is not too large. However, it is very possible that it will make the loss of some other training examples become larger. Hence, we need to update the parameters using all training examples. When all training examples have been used to update the parameters, we nay one epoch has been processed. One epoch will in general reduce the average loss on the training set until the learning system overfits the training data. Hence, we can repeat the gradient descent updating epochs and terminate at some point to obtain the CNN parameters (e.g., we can terminate when the average loss on a validation set increases).

The last layer's partial derivatives are easy to compute. Because $x^L$ is connected to z directly under the control of parameters $w^L$, it is easy to compute $\frac{\delta z}{\delta w^L}$. This step is only needed when $w^L$ is not empty. In the same spirit, it is also easy to compute $\frac{\delta z}{\delta x^L}$. For example, if the squared $L_2$ loss is used, we have an empty $\frac{\delta z}{\delta w^L}$, and $\frac{\delta z}{\delta x^L} = x^L - t$.

In fact, for every layer, we compute two sets of gradients: the partial derivatives of z with respect to the layer parameters $w^i$, and that layer's input xi. The term $\frac{\delta z}{\delta w^i}$, as seen in Equation 4, can be used to update the current (i-th) layer's parameters. The term $\frac{\delta z}{\delta x^i}$ can be used to update parameters backwards, e.g., to the (i-1)-th layer. An intuitive explanation is: $x^i$ is the output of the (i-1)-th layer and $\frac{\delta z}{\delta x^i}$ is how $x^i$ should be changed to reduce the loss function. Hence, we could view $\frac{\delta z}{\delta x^i}$ as the part of the "error" supervision information propagated from z backward till the current layer, in a layer by layer fashion. Thus, we can continue the back propagation process, and use $\frac{\delta z}{\delta x^i}$ to propagate the errors backward to the (i-1)-th layer. This layer-by-layer backward updating procedure makes learning a CNN much easier.

Take the i-th layer as an example. When we update the i-th layer, the back propagation process for the (i+1)-th layer must have been finished. That is, we already computed the terms $\frac{\delta z}{\delta w^{i+1}}$ and $\frac{\delta z}{\delta x^{i+1}}$. Both are stored in memory and ready for use. Now our task is to compute $\frac{\delta z}{\delta w^i}$ and $\frac{\delta z}{\delta x^i}$. Using the chain rule, we have

$$\frac{\partial z}{\partial (vec(w^i)^T)} = \frac{\partial z}{\partial (vec(x^{i+1})^T)} \frac{\partial vec\left(x^{i+1}\right)}{\partial (vec(w^i)^T)},$$

$$\frac{\partial z}{\partial (vec(x^i)^T)} = \frac{\partial z}{\partial (vec(x^{i+1})^T)} \frac{\partial vec\left(x^{i+1}\right)}{\partial (vec(x^i)^T)},$$

Since $\frac{\partial z}{\partial x^{i+1}}$ is already computed and stored in memory, it requires just a matrix reshaping operation (vec) and an additional transpose operation to get $\frac{\partial z}{\partial vec(x^{i+1})}$, which is the first term in the right hand side (RHS) of both equations.

So long as we can compute $\frac{\partial vec(x^{i+1})}{\partial (vec(w^i)^T)}$ and $\frac{\partial vec(x^{i+1})}{\partial (vec(x^i)^T)}$, we can easily get what we want (the left hand side of both equations). $\frac{\partial vec(x^{i+1})}{\partial (vec(w^i)^T)}$ and $\frac{\partial vec(x^{i+1})}{\partial (vec(x^i)^T)}$ are much easier to compute than directly computing $\frac{\partial z}{\partial (vec(w^i)^T)}$ and $\frac{\partial z}{\partial (vec(x^i)^T)}$, because $x^i$ is directly related to $x^{i+1}$, through a function with parameters $w^i$.

In the context of neural networks, activations serve as transfer functions between the input of a neuron and the output. They define under which conditions the node is activated, i.e. the input values are mapped to the output which, in hidden layers, serves again as one of the inputs to the succeeding neuron. There exists a vast amount of different activation functions with different characteristics.

A loss function quantifies how well an algorithm models the given data. To learn from the data and in order to change the weights of the network, the loss function has to be minimized. Generally, one can make the distinction between a regression loss and classification loss. Classification predicts output from set of finite categorical values (class labels), and regression, on the other hand, deals with prediction a continuous value.

In the following mathematical formulations, the following parameters are defined as:

- $n$ is the number of training examples
- $i$ is the i-th training example in a data set
- $y_i$ is the ground truth label for the i-th training example
- $\hat{y}_i$ is the prediction for i-th training example

The most common setting for classification problems is cross-entropy loss. It increases as the predicted probability diverges from the actual label. The log of the actual predicted probability is multiplied with the ground truth class. An important aspect of this is that cross entropy loss penalizes heavily the predictions that are confident but wrong. The mathematical formulation can be described as:

$$CrossEntropyLoss = -\,(y_i log(\hat{y}_i) + (1 - y_i)\log\,(1 - \hat{y}_i)) \qquad (6)$$

A typical example for a regression loss is the mean square error or $L_2$ loss. As the name suggests, mean square error is measured as the average of the squared difference between predictions and actual observations. It is only concerned with the average magnitude of error irrespective of their direction. However, due to squaring, predictions which are far away from actual values are penalized heavily in comparison to less deviated predictions. Plus MSE has nice mathematical properties which makes it easier to calculate gradients. Its formulation is as follows:

$$MSE = \frac{1}{n} \cdot \sum_{i=1}^{n} (y_i - \hat{y}_i)^2$$

The following documents contain information on the functioning of convolutional neural networks:

I. Goodfellow, Y. Bengio, and A. Courville, "Deep learning, chapter convolutional networks." http://www.deeplearning book.org, 2016.

J. Wu, "Introduction to convolutional neural networks." https://pdfs.semanticscholar.org/450c/a19932fcef1ca6d0442cbf52fec38fb9d1e5.pdf. "Common loss functions in machine learning." https://towardsdatascience.com/common-loss-functions-in-machine-learning-46af0ffc4d23. Accessed: 2019-08-22.

Alex Krizhevsky, Ilya Sutskever, and Geoffrey E. Hinton, "Imagenet classification with deep convolutional neural networks." http://papers.nips.cc/paper/4824-imagenet-classification -with-deep-convolutional-neural-networks.pdf.

S. Ren, K. He, R. Girshick, and J. Sun, "Faster r-cnn: Towards real-time object detection with region proposal networks." https://arxiv.org/pdf/1506.01497.pdf.

S.-E. Wei, V. Ramakrishna, T. Kanade, and Y. Sheikh, "Convolutional pose machines." https://arxiv.org/pdf/1602.00134.pdf.

Jonathan Long, Evan Shelhamer, and Trevor Darrell, "Fully convolutional networks for semantic segmentation." https://www.cv-foundation.org/openaccess/content_cvpr_2015/papers/Long_Fully_Convolutional_Ne tworks_2015_CVPR_paper.pdf.

## DEFINITIONS

In this section, definitions for specific terminology used in this disclosure are offered which also form part of the present disclosure.

The method in accordance with the invention is for example a computer implemented method. For example, all the steps or merely some of the steps (i.e. less than the total number of steps) of the method in accordance with the invention can be executed by a computer (for example, at least one computer). An embodiment of the computer implemented method is a use of the computer for performing a data processing method. An embodiment of the computer implemented method is a method concerning the operation of the computer such that the computer is operated to perform one, more or all steps of the method.

The computer for example comprises at least one processor and for example at least one memory in order to (technically) process the data, for example electronically and/or optically. The processor being for example made of a substance or composition which is a semiconductor, for example at least partly n- and/or p-doped semiconductor, for example at least one of II-, III-, IV-, V-, VI-semiconductor material, for example (doped) silicon and/or gallium arsenide. The calculating or determining steps described are for example performed by a computer. Determining steps or calculating steps are for example steps of determining data within the framework of the technical method, for example within the framework of a program. A computer is for example any kind of data processing device, for example electronic data processing device. A computer can be a device which is generally thought of as such, for example desktop PCs, notebooks, netbooks, etc., but can also be any programmable apparatus, such as for example a mobile phone or an embedded processor. A computer can for example comprise a system (network) of "sub-computers", wherein each sub-computer represents a computer in its own right. The term "computer" includes a cloud computer, for example a cloud server. The term computer includes a server resource. The term "cloud computer" includes a cloud computer system which for example comprises a system of at least one cloud computer and for example a plurality of operatively interconnected cloud computers such as a server farm. Such a cloud computer is preferably connected to a wide area network such as the world wide web (WWW) and located in a so-called cloud of computers which are all connected to the world wide web. Such an infrastructure is used for "cloud computing", which describes computation, software, data access and storage services which do not require the end user to know the physical location and/or configuration of the computer delivering a specific service. For example, the term "cloud" is used in this respect as a metaphor for the Internet (world wide web). For example, the cloud provides computing infrastructure as a service (IaaS). The cloud computer can function as a virtual host for an operating system and/or data processing application which is used to execute the method of the invention. The cloud computer is for example an elastic compute cloud (EC2) as provided by Amazon Web Services™. A computer for example comprises interfaces in order to receive or output data and/or perform an analogue-to-digital conversion. The data are for example data which represent physical properties and/or which are generated from technical signals. The technical signals are for example generated by means of (technical) detection devices (such as for example devices for detecting marker devices) and/or (technical) analytical devices (such as for example devices for performing (medical) imaging methods), wherein the technical signals are for example electrical or optical signals. The technical signals for example represent the data received or outputted by the computer. The computer is preferably operatively coupled to a display device which allows information outputted by the computer to be displayed, for example to a user. One example of a display device is a virtual reality device or an augmented reality device (also referred to as virtual reality glasses or augmented reality glasses) which can be used as "goggles" for navigating. A specific example of such augmented reality glasses is Google Glass (a trademark of Google, Inc.). An augmented reality device or a virtual reality device can be used both to input information into the computer by user interaction and to display information outputted by the computer. Another example of a display device would be a standard computer monitor comprising for example a liquid crystal display operatively coupled to the computer for receiving display control data from the computer for generating signals used to display image information content on the display device. A specific embodiment of such a computer monitor is a digital lightbox. An example of such a digital lightbox is Buzz®, a product of Brainlab AG. The monitor may also be the monitor of a portable, for example handheld, device such as a smart phone or personal digital assistant or digital media player.

The invention also relates to a computer program comprising instructions which, when on the program is executed by a computer, cause the computer to carry out the method or methods, for example, the steps of the method or methods, described herein and/or to a computer-readable storage medium (for example, a non-transitory computer-readable storage medium) on which the program is stored and/or to a computer comprising said program storage medium and/or to a (physical, for example electrical, for example technically generated) signal wave, for example a digital signal wave, such as an electromagnetic carrier wave carrying information which represents the program, for example the aforementioned program, which for example comprises code means which are adapted to perform any or all of the method steps described herein. The signal wave is in one example a data carrier signal carrying the aforementioned computer program. The invention also relates to a computer comprising at least one processor and/or the aforementioned computer-readable storage medium and for example a memory, wherein the program is executed by the processor.

Within the framework of the invention, computer program elements can be embodied by hardware and/or software (this includes firmware, resident software, micro-code, etc.). Within the framework of the invention, computer program elements can take the form of a computer program product which can be embodied by a computer-usable, for example computer-readable data storage medium comprising computer-usable, for example computer-readable program instructions, "code" or a "computer program" embodied in said data storage medium for use on or in connection with the instruction-executing system. Such a system can be a computer; a computer can be a data processing device comprising means for executing the computer program elements and/or the program in accordance with the invention, for example a data processing device comprising a digital processor (central processing unit or CPU) which executes the computer program elements, and optionally a volatile memory (for example a random access memory or RAM) for storing data used for and/or produced by executing the computer program elements. Within the framework of the present invention, a computer-usable, for example computer-readable data storage medium can be any data storage medium which can include, store, communicate, propagate or transport the program for use on or in connection with the instruction-executing system, apparatus or device. The computer-usable, for example computer-readable data storage medium can for example be, but is not limited to, an electronic, magnetic, optical, electromagnetic, infrared or semiconductor system, apparatus or device or a medium of propagation such as for example the Internet. The computer-usable or computer-readable data storage medium could even for example be paper or another suitable medium onto which the program is printed, since the program could be electronically captured, for example by optically scanning the paper or other suitable medium, and then compiled, interpreted or otherwise processed in a suitable manner. The data storage medium is preferably a non-volatile data storage medium. The computer program product and any software and/or hardware described here form the various means for performing the functions of the invention in the example embodiments. The computer and/or data processing device can for example include a guidance information device which includes means for outputting guidance information. The guidance information can be outputted, for example to a user, visually by a visual indicating means (for example, a monitor and/or a lamp) and/or acoustically by an acoustic indicating means (for example, a loudspeaker and/or a digital speech output device) and/or tactilely by a tactile indicating means (for example, a vibrating element or a vibration element incorporated into an instrument). For the purpose of this document, a computer is a technical computer which for example comprises technical, for example tangible components, for example mechanical and/or electronic components. Any device mentioned as such in this document is a technical and for example tangible device.

The expression "acquiring data" for example encompasses (within the framework of a computer implemented method) the scenario in which the data are determined by the computer implemented method or program. Determining data for example encompasses measuring physical quantities and transforming the measured values into data, for example digital data, and/or computing (and e.g. outputting) the data by means of a computer and for example within the framework of the method in accordance with the invention. A step of "determining" as described herein for example comprises or consists of issuing a command to perform the determination described herein. For example, the step comprises or consists of issuing a command to cause a computer, for example a remote computer, for example a remote server, for example in the cloud, to perform the determination. Alternatively or additionally, a step of "determination" as described herein for example comprises or consists of receiving the data resulting from the determination described herein, for example receiving the resulting data from the remote computer, for example from that remote computer which has been caused to perform the determination. The meaning of "acquiring data" also for example encompasses the scenario in which the data are received or retrieved by (e.g. input to) the computer implemented method or program, for example from another program, a previous method step or a data storage medium, for example for further processing by the computer implemented method or program. Generation of the data to be acquired may but need not be part of the method in accordance with the invention. The expression "acquiring data" can therefore also for example mean waiting to receive data and/or receiving the data. The received data can for example be inputted via an interface. The expression "acquiring data" can also mean that the computer implemented method or program performs steps in order to (actively) receive or retrieve the data from a data source, for instance a data storage medium (such as for example a ROM, RAM, database, hard drive, etc.), or via the interface (for instance, from another computer or a network). The data acquired by the disclosed method or device, respectively, may be acquired from a database located in a data storage device which is operably to a computer for data transfer between the database and the computer, for example from the database to the computer. The computer acquires the data for use as an input for steps of determining data. The determined data can be output again to the same or another database to be stored for later use. The database or database used for implementing the disclosed method can be located on network data storage device or a network server (for example, a cloud data storage device or a cloud server) or a local data storage device (such as a mass storage device operably connected to at least one computer executing the disclosed method). The data can be made "ready for use" by performing an additional step before the acquiring step. In accordance with this additional step, the data are generated in order to be acquired. The data are for example detected or captured (for example by an analytical device). Alternatively or additionally, the data are inputted in accordance with the additional step, for instance via interfaces. The data generated can for example be inputted (for instance into the computer). In accordance with the additional step (which precedes the acquiring step), the data can also be provided by performing the additional step of storing the data in a data storage medium (such as for example a ROM, RAM, CD and/or hard drive), such that they are ready for use within the framework of the method or program in accordance with the invention. The step of "acquiring data" can therefore also involve commanding a device to obtain and/or provide the data to be acquired. In particular, the acquiring step does not involve an invasive step which would represent a substantial physical interference with the body, requiring professional medical expertise to be carried out and entailing a substantial health risk even when carried out with the required professional care and expertise. In particular, the step of acquiring data, for example determining data, does not involve a surgical step and in particular does not involve a step of treating a human or animal body using surgery or therapy. In order to distinguish the different data used by the present method, the data are denoted (i.e. referred to) as "XY data" and the like and are defined in terms of the information which they describe, which is then preferably referred to as "XY information" and the like.

Preferably, atlas data is acquired which describes (for example defines, more particularly represents and/or is) a general three-dimensional shape of the anatomical body part. The atlas data therefore represents an atlas of the anatomical body part. An atlas typically consists of a plurality of generic models of objects, wherein the generic models of the objects together form a complex structure. For example, the atlas constitutes a statistical model of a patient's body (for example, a part of the body) which has been generated from anatomic information gathered from a plurality of human bodies, for example from medical image data containing images of such human bodies. In principle, the atlas data therefore represents the result of a statistical analysis of such medical image data for a plurality of human bodies. This result can be output as an image - the atlas data therefore contains or is comparable to medical image data. Such a comparison can be carried out for example by applying an image fusion algorithm which conducts an image fusion between the atlas data and the medical image data. The result of the comparison can be a measure of similarity between the atlas data and the medical image data. The atlas data comprises image information (for example, positional image information) which can be matched (for example by applying an elastic or rigid image fusion algorithm) for example to image information (for example, positional image information) contained in medical image data so as to for example compare the atlas data to the medical image data in order to determine the position of anatomical structures in the medical image data which correspond to anatomical structures defined by the atlas data.

The human bodies, the anatomy of which serves as an input for generating the atlas data, advantageously share a common feature such as at least one of gender, age, ethnicity, body measurements (e.g. size and/or mass) and pathologic state. The anatomic information describes for example the anatomy of the human bodies and is extracted for example from medical image information about the human bodies. The atlas of a femur, for example, can comprise the head, the neck, the body, the greater trochanter, the lesser trochanter and the lower extremity as objects which together make up the complete structure. The atlas of a brain, for example, can comprise the telencephalon, the cerebellum, the diencephalon, the pons, the mesencephalon and the medulla as the objects which together make up the complex structure. One application of such an atlas is in the segmentation of medical images, in which the atlas is matched to medical image data, and the image data are compared with the matched atlas in order to assign a point (a pixel or voxel) of the image data to an object of the matched atlas, thereby segmenting the image data into objects.

For example, the atlas data includes information of the anatomical body part. This information is for example at least one of patient-specific, non-patient-specific, indication-specific or non-indication-specific. The atlas data therefore describes for example at least one of a patient-specific, non-patient-specific, indication-specific or non-indication-specific atlas. For example, the atlas data includes movement information indicating a degree of freedom of movement of the anatomical body part with respect to a given reference (e.g. another anatomical body part). For example, the atlas is a multimodal atlas which defines atlas information for a plurality of (i.e. at least two) imaging modalities and contains a mapping between the atlas information in different imaging modalities (for example, a mapping between all of the modalities) so that the atlas can be used for transforming medical image information from its image depiction in a first imaging modality into its image depiction in a second imaging modality which is different from the first imaging modality or to compare (for example, match or register) images of different imaging modality with one another.

In the field of medicine, imaging methods (also called imaging modalities and/or medical imaging modalities) are used to generate image data (for example, two-dimensional or three-dimensional image data) of anatomical structures (such as soft tissues, bones, organs, etc.) of the human body. The term "medical imaging methods" is understood to mean (advantageously apparatus-based) imaging methods (for example so-called medical imaging modalities and/or radiological imaging methods) such as for instance computed tomography (CT) and cone beam computed tomography (CBCT, such as volumetric CBCT), x-ray tomography, magnetic resonance tomography (MRT or MRI), conventional x-ray, sonography and/or ultrasound examinations, and positron emission tomography. For example, the medical imaging methods are performed by the analytical devices. Examples for medical imaging modalities applied by medical imaging methods are: X-ray radiography, magnetic resonance imaging, medical ultrasonography or ultrasound, endoscopy, elastography, tactile imaging, thermography, medical photography and nuclear medicine functional imaging techniques as positron emission tomography (PET) and Single-photon emission computed tomography (SPECT), as mentioned by Wikipedia. The image data thus generated is also termed "medical imaging data". Analytical devices for example are used to generate the image data in apparatus-based imaging methods. The imaging methods ultrasound, endoscopy, elastography, tactile imaging, thermography, medical photography and nuclear medicine functional imaging techniques as positron emission tomography (PET) and Single-photon emission computed tomography (SPECT), as mentioned by Wikipedia. The image data thus generated is also termed "medical imaging data". Analytical devices for example are used to generate the image data in apparatus-based imaging methods. The imaging methods are for example used for medical diagnostics, to analyse the anatomical body in order to generate images which are described by the image data. The imaging methods are also for example used to detect pathological changes in the human body. However, some of the changes in the anatomical structure, such as the pathological changes in the structures (tissue), may not be detectable and for example may not be visible in the images generated by the imaging methods. A tumour represents an example of a change in an anatomical structure. If the tumour grows, it may then be said to represent an expanded anatomical structure. This expanded anatomical structure may not be detectable; for example, only a part of the expanded anatomical structure may be detectable. Primary/high-grade brain tumours are for example usually visible on MRI scans when contrast agents are used to infiltrate the tumour. MRI scans represent an example of an imaging method. In the case of MRI scans of such brain tumours, the signal enhancement in the MRI images (due to the contrast agents infiltrating the tumour) is considered to represent the solid tumour mass. Thus, the tumour is detectable and for example discernible in the image generated by the imaging method. In addition to these tumours, referred to as "enhancing" tumours, it is thought that approximately 10% of brain tumours are not discernible on a scan and are for example not visible to a user looking at the images generated by the imaging method.

## BRIEF DESCRIPTION OF THE DRAWINGS

In the following, the invention is described with reference to the appended figures which give background explanations and represent specific embodiments of the present disclosure. The scope of the disclosure is however not limited to the specific features disclosed in the context of the figures, wherein

Fig. 1 illustrates the structure of a neuron as part of a neural network;
Fig. 2a illustrates the basic steps of the method according to the first aspect;
Fig. 2b shows a specific example of the steps of the method according to the first aspect;
Fig. 3 illustrates the basic steps of the method according to the second aspect;
Fig. 4 illustrates the basic steps of the method according to the third aspect;
Fig. 5 shows a possible use of the method according to the third aspect;
Fig. 6 illustrates the principle of dimensionality reduction;
Fig. 7 illustrates the encoder functionality of the present disclosure;
Fig. 8 shows the principle of transforming a medical image into a histogram representing a cluster distribution;
Fig. 9 shows how the trainable algorithm learns how to cluster similar subsets;
Fig. 10 is a flow diagram of a possible use of the method according to the third aspect;
Fig. 11 is a latent space visualization for determining similar subsets;
Fig. 12 is a latent space visualization for clustering the subsets;
Fig. 13 is a schematic illustration of the system according to the ninth aspect.

## DESCRIPTION OF EMBODIMENTS

Fig. 1 illustrates the structure of a neuron as part of a neural network, for example a convolutional neural network, in which input is assigned certain weights for processing by an activation function which generates the output of the neuron.

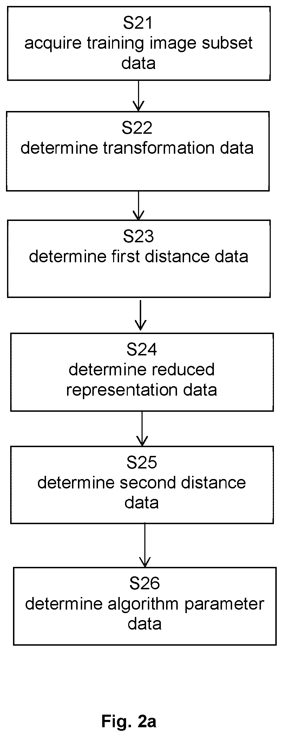

Fig. 2a illustrates the basic steps of the method according to the first aspect, in which step S21 encompasses acquisition of the training image subset data, step S22 encompasses determination of the transformation data and subsequent step S23 encompasses determination of the first distance data. This is followed by step S24

S53 involving determination of the first distance data and step 54 comprising application of the artificial intelligence algorithm for determining embeddings representing characteristic image features. Then, step S55 determines the second distance data in the low-dimensional latent space, i.e. the dimensionality-reduced reference system. Subsequent step S56 then updates the parameters of the artificial intelligence algorithm which is used for determining the embeddings. Steps S54 to S56 are then repeated in an iterative manner.

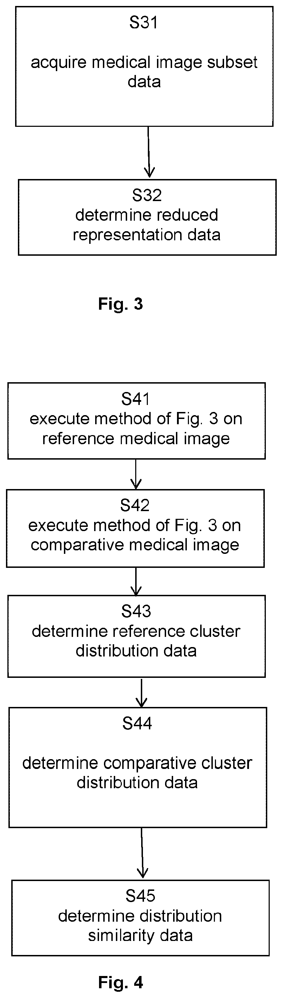

Fig. 3 illustrates the basic steps of the method according to the second aspect, in which step S31 encompasses acquiring the medical image subset data, and subsequent step S32 encompasses determination of the reduced representation data.

Fig. 4 illustrates the basic steps of the method according to the third aspect, in which step S41 encompasses acquisition of the first imaging device operating parameter data, step S42 encompasses acquisition imaging signal data and subsequent step S43 encompasses determination of the second imaging device control parameter data.

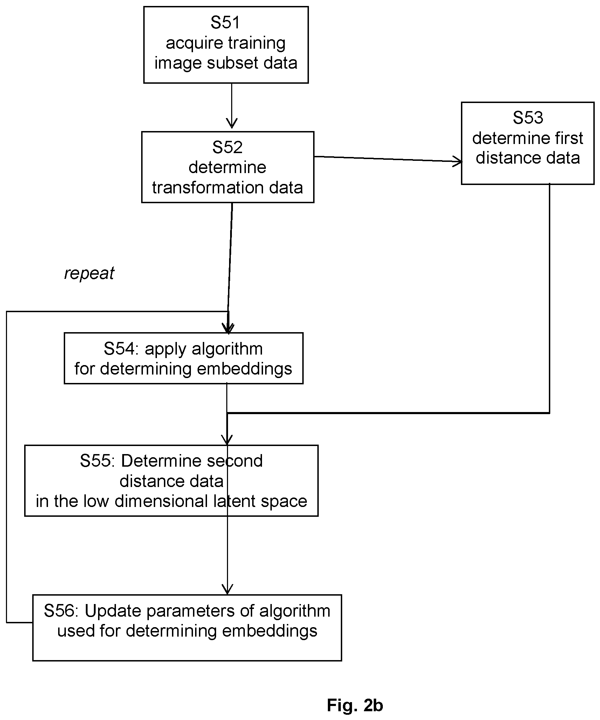

Fig. 2 illustrates an embodiment of the present invention that includes all essential features of the invention. In this embodiment, the entire data processing which is part of the method according to the first aspect is performed by a computer 2. Reference sign 1 denotes the input of data acquired by the method according to the first aspect into the computer 2 and reference sign 3 denotes the output of data determined by the method according to the first aspect.

Figure 5 shows a query for similar images and/or content-based image retrieval. The aim of such a use of the method according to the third aspect is to present among a set of images 1 the subset of images 4 showing the most similar visual patterns to an input image 2. This is done by using an image analysis system 3 which has the functionality to perform the method according to the third aspect and to which the set of images 1 and the input image 2 are input.

Fig. 6 illustrates how to conduct a transformation of input images into a representation of reduced dimensionality by determining embeddings in latent space. The embeddings represent characteristic image features, and a distance between the embeddings can be computed in the latent space.

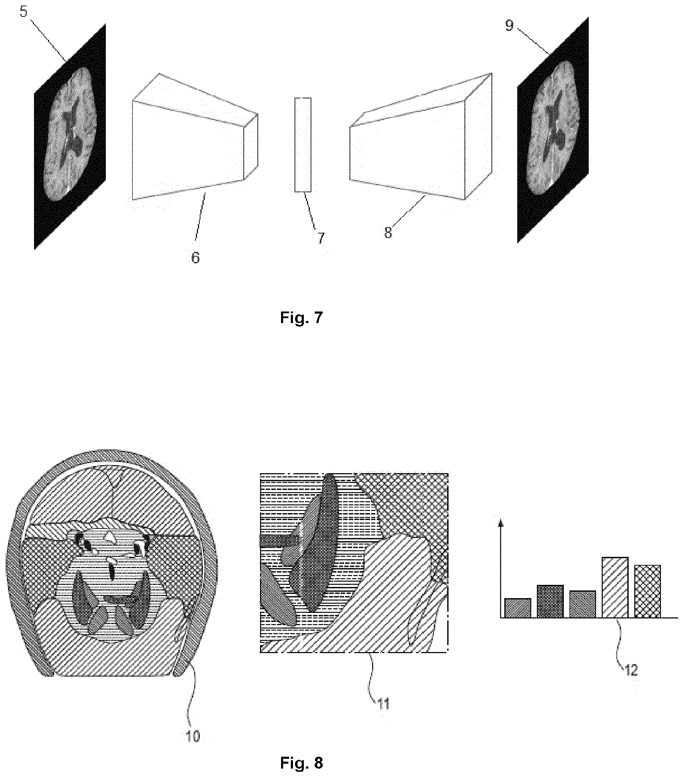

Fig. 7 illustrates a convolutional autoencoder model trained with a reconstruction loss

$$L_{reconstr} = -x' \log(x) - (1 - x') \log(1 - x)$$

and optimized for minimum latent space dimension and model complexity to still obtain a good reconstruction. The model contains an encoder 6 to which a medical image 5 is input to determine its embeddings 7 which can then be decoded by a decoder 8 into the original medical image 9.

According to Fig. 8, a patch (i.e. subset) 11 of a medical image 10 is transformed into a histogram 12 containing in its classes counts of similar image constituents. Such a histogram is an example of a feature distribution, i.e. a distribution of the dimensionality-reduced representation of the medical image 10.

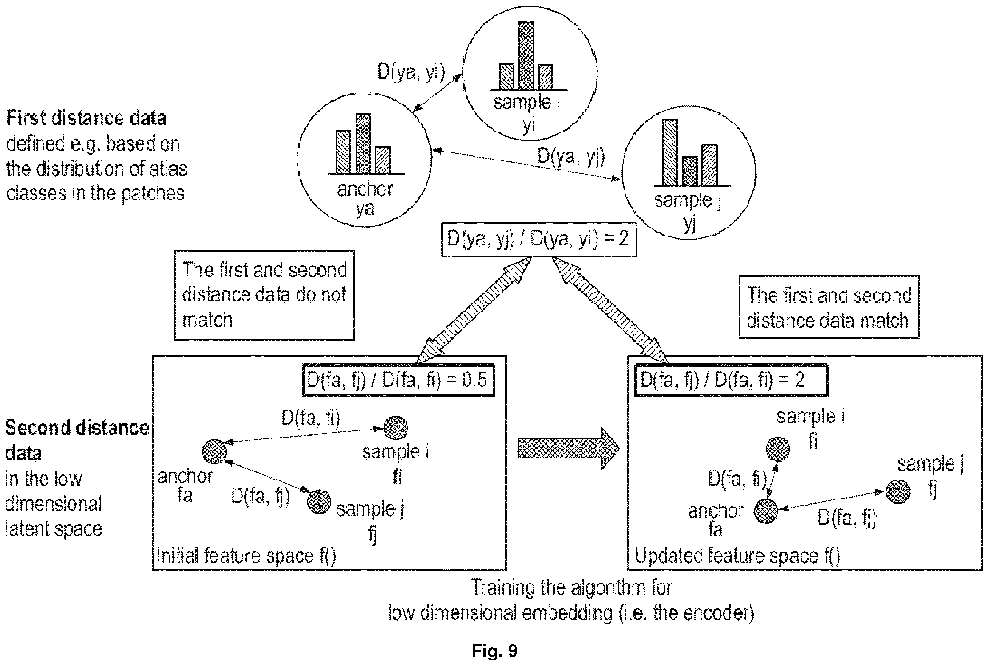

Fig. 9 shows how the encoder model of Fig. 7 can be used with a triplet approach disclosed in Hoffer, E. et al., Deep Metric Learning using Triplet Network, arXiv:1412.6622, using a loss function:

$$\ell_{\text{lr}}(a, i, j) = \left\{ \log \frac{D(f_a, f_i)}{D(f_a, f_j)} - \log \frac{D(y_a, y_i)}{D(y_a, y_j)} \right\}^2,$$

with

$f_a, f_i, f_j$ : embeddings of anchor *a,* positive sample *i,* and negative sample *j*
$y_a, y_i, y_j$ : Labels of anchor *a,* positive sample *i,* and negative sample *j*
$D(\cdots)$ : Euclidean Distance
$D(y_a, y_i) < D(y_a, y_j)$ : triplets considered

Fig. 9 illustrates that the trainable algorithm is trained with a log ratio loss on subset triplets. Each triplet is formed by three subsets: one anchor subset denoted ya and two sample subsets denoted yi and yj. In the illustrated example, each subset is represented by its distribution of anatomical classes (red / blue / green) (cf. top figure).

The distance D(ya, yi) (resp. D(ya, yj)) between the anchor subset and the subset i (resp. j) is defined by the e.g. Euclidean distance between the class distributions. The ratio between the two distances is in the displayed example equal to two. The subsets ya, yi, and yj are transformed into a low dimensional reference system using the trainable algorithm, yielding the low dimensional feature vectors fa, fi and fj. The distance D(fa, fi) (resp. D(fa, fj)) between the anchor feature vector fa and the feature vector fi (resp. fj) is defined by e.g. the Euclidean distance between the two vectors fa and fi (resp. fj). In the initial state of the trainable algorithm (bottom left), the ratio between the two distances D(fa, fi) and D(fa, fj) in the low dimensional reference system is equal to 0.5 and therefore differs from the ratio of the original distances D(ya, yi) and D(ya, yj) in the "class distribution" system, yielding a high value of the loss. Updating the trainable algorithm to minimize the loss yields (on the bottom right) a low dimensional reference system in which the ratio of the distances in the "class distribution system" and in the low dimensional system are similar, i.e. in the presented example equal to 2.

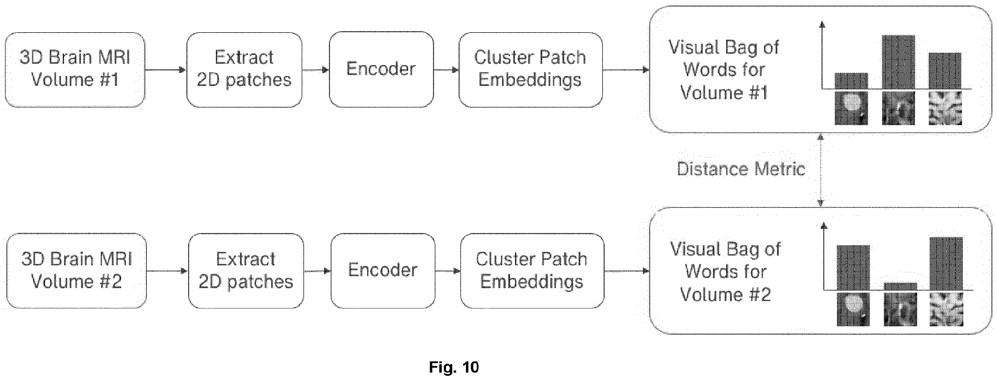

Fig. 10 is a flow diagram showing the steps of the method according to the third aspect in a practical embodiment: The method according to the second aspect is conducted on medical images representing a three-dimensional brain magnetic resonance imaging volume #1 and #2, respectively, in order to determine two-dimensional patches from the volumes representing the subsets, which are then encoded and the embeddings in each patch are clustered. Thereby, a visual bag of words is determine for each of volumes #1 and #2 which allows to compute a distance metric between the respective feature vectors which constitutes a measure of similarity between volume #1 and volume #2.

The clustering can be performed using one of the following clustering methods

In general, there are two common methods to find clusters for data in a certain space. For the first method (e.g. k-means clustering) the number of desired clusters k is set in advance whereas for the second method (e.g. DBSCAN) the number of clusters is automatically obtained by identifying dense regions in the space as clusters.

First method: Minimizing variance within a fixed number of k clusters

For the first method with fixed k it is common to have an iterative algorithm that tries to minimize the variance within each cluster. If $\{x_1, x_2, ..., x_n\}$ is a set of n data point and $C = \{C_1, C_2, ..., C_k\}$ is a set of k clusters, formally finding C so that:

$$\arg \min_C \sum_{i=1}^{k} |C_i| \operatorname{Var}(C_i)$$

It starts off with a random assignment of each data point to one of the k clusters. It then alternates between the two steps until the cluster assignments converge:

- Assign each data point to the cluster whose mean is closest to the data point.
- Recalculate the mean of each cluster based on all the data points that are assigned to it.

Second method: Identify clusters based on density

The second method finds dense regions in the space which will be the future clusters and outliers which will be considered noise. There are usually two main parameters:

- The threshold $\varepsilon$, which defines a maximum distance between data points to be considered neighbors and
- a minimum number of neighboring data points $m$ for a data point $x_i$ to be considered a core point.

In general, density-based clustering algorithms contain the following steps:

- Identify all core points that have at least $m$ points within a distance of less or equal to $\varepsilon$ around them.
- Define a graph where the core points are nodes and vertices exist between core points that are less than $\varepsilon$ apart.
- Consider each connected component of this graph a cluster.
- Assign all data points which are not core points to the nearest cluster if the distance to its closest core point is not more than $\varepsilon$, otherwise consider this data point noise.

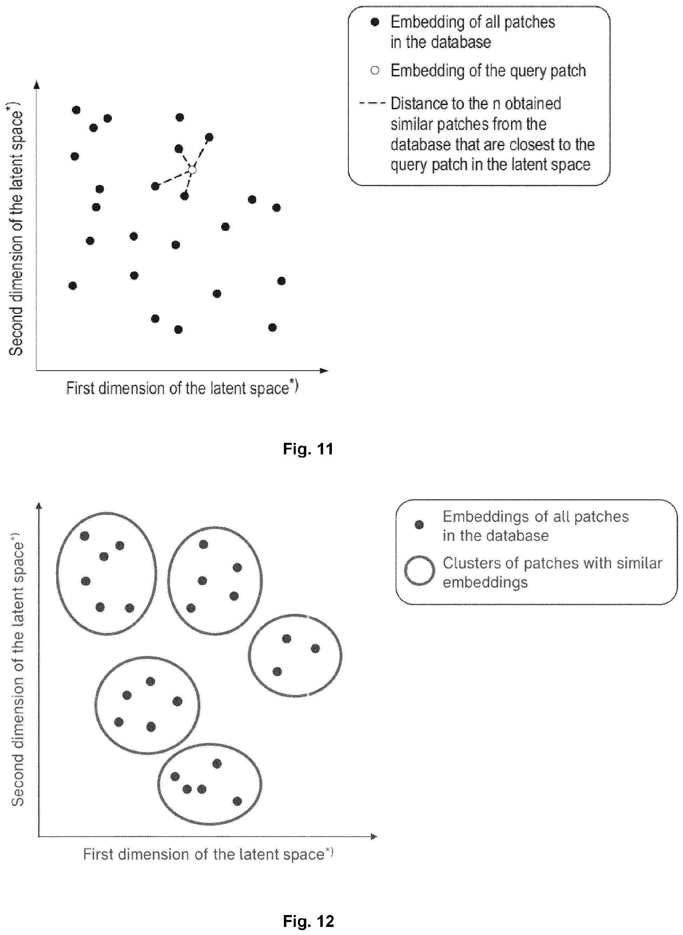

Fig. 11 shows how a distance is determined in latent space between an embedding of a query patch, i.e. a patch which has been extracted from a medical image and is currently under consideration, and n obtained similar patches that are closest to the query patch in the latent space. Fig. 12 illustrates that patches containing similar embeddings are clustered.

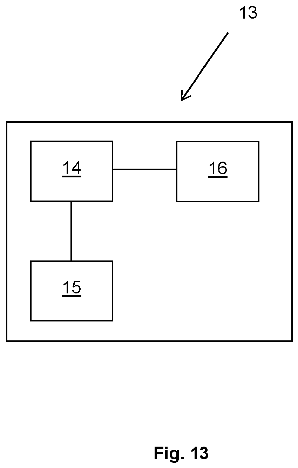

Fig. 13 is a schematic illustration of the medical system 13 according to the ninth aspect. The system is in its entirety identified by reference sign 13 and comprises a computer 14, an electronic data storage device (such as a hard disc) 15 for storing at least the medical image subset data and a program storage medium according to the fifth aspect The components of the medical system 13 have the functionalities and properties explained above with regard to the ninth aspect of this disclosure.

**Claims**

1. A computer-implemented method of determining a similarity between medical images, the method comprising the following steps:

executing (S41) a computer-implemented method of determining dimensionality-reduced representations of subsets of a medical image comprising the following steps:

a) medical image subset data is acquired (S31) which describes subsets of the medical image, wherein the medical image subset data describes a reference medical image and a comparative medical image;
b) reduced representation data is determined (S32) by inputting the medical image subset data into a trainable algorithm configured to determine the dimensionality-reduced representations and causing the trainable algorithm to determine the dimensionality-reduced representations,

wherein the trainable algorithm has been configured to determine the dimensionality-reduced representations by executing a computer-implemented method of training a trainable algorithm to determine a correspondence between a subset of a medical image and a dimensionality-reduced representation of the subset, the method of training comprising the following steps:

c) training image subset data is acquired (S21) which describes subsets of a training medical image;
d) transformation data is determined (S22) which describes a transformation between the training image positional reference system in which positions in the medical image are defined and a comparative reference system which is different from the training image reference system;
e) first distance data is determined (S23) based on the training image subset data and the transformation data, wherein the first distance data describes a distance between the subsets in the comparative reference system;
f) reduced representation data is determined (S24) by encoding the training image subset data, wherein the reduced representation data describes a dimensionality-reduced representation of each of the subsets in a dimensionality-reduced reference system which is reduced in dimensionality compared to the dimensionality of the training image reference system;
g) second distance data is determined (S25) based on the reduced representation data, wherein second distance data describes a distance between the dimensionality-reduced representations in the dimensionality-reduced reference system;
h) algorithm parameter data is determined (S26) which describes parameters of the trainable algorithm, wherein the algorithm parameter data is determined based on the first distance data and the second distance data, thereby adjusting the parameters to reflect that the lower-dimensional representations correspond to the subsets of the training medical image if the distance between the dimensionality-reduced representations corresponds to the distance between the subsets in the comparative reference system, wherein the trainable algorithm is configured to compute a loss function by applying a triplet network approach to minimize the distance between the dimensionality-reduced representations in the dimensionality-reduced reference system for determining whether the lower-dimensional representations correspond to the subsets of the training medical image if the distance between the dimensionality-reduced representations corresponds to the distance between the subsets in the comparative reference system;
i) determining (S43), based on the subset cluster data determined for the reference medical image, reference cluster distribution data describing a reference distribution of the dimensionality-reduced representations of the subsets of the reference medical image on anatomical regions;
j) determining (S44), based on the subset cluster data determined for the comparative medical image, comparative cluster distribution data describing a comparative distribution of the dimensionality-reduced representations of the subsets of the comparative medical image on anatomical regions;
k) determining (S45), based on the reference cluster distribution data and the comparative cluster distribution data, distribution similarity data describing a similarity between the reference distribution and the comparative distribution, wherein it is determined that the reference medical image and the comparative medical image originate from the same patient if the similarity is high.

2. The method according to the preceding claim, wherein determining the distribution similarity data comprises:

acquiring difference threshold data describing a predetermined value of the difference;
determining, based on the reference cluster distribution data and the comparative cluster distribution data, distribution difference data describing a difference between the reference distribution and the comparative distribution; determining the distribution similarity data based on the distribution difference data and the difference threshold data.

3. The method according to the preceding claim, comprising:

   comparing the difference to the threshold distance; and
   determining that the reference medical image and the comparative medical image are similar to each other if the difference is not greater than the threshold distance.

4. The method according to claim 2, wherein the distribution similarity data is determined by performing a k-nearest neighbours search that outputs a predetermined number of comparative medical images that are the closest to the reference image.

5. The method according to the preceding claim, comprising:

   acquiring medical image data which describes the medical image; and
   determining image subset data by extracting, from the medical image data, the subsets.

6. The method according to any one of the preceding claims, comprising:
   determining cluster data describing clusters of the lower-dimensional representations of the subsets.

7. The method according to any one of the preceding claims, wherein the subsets are extracted from the medical image data by applying at least one of the following criteria:

   - each of the subsets comprises only units of the medical image which have no more than a predetermined distance from each other;
   - no more than a predetermined amount of each of the subsets includes black image content;
   - each of the subsets has a predetermined size;
   - an overlap of each of the subsets with a spatially neighbouring subset does not exceed a predetermined percentage of the size of each of the subsets.

8. The method according to any one of the preceding claims, comprising acquiring atlas data describing a digital model of an anatomical body part, wherein the comparative reference system describes positions in the digital model, wherein the subsets are extracted from the medical image data by applying a cluster analysis algorithm.

9. The method according to the preceding claim, wherein the classes define anatomical structures segmented in the digital model.

10. A program which, when running on a computer (2) or when loaded onto a computer (2), causes the computer (2) to perform the method steps of the method according to any one of the preceding claims.

11. A program storage medium on which the program according to the preceding claim is stored.

12. A data carrier signal carrying the program according to claim 10.

13. A computer (2) comprising at least one processor and a memory, wherein the program according to claim 10 is running on the at least one processor or is loaded into the memory of the computer (2).

14. A system (1) for determining a similarity between medical images, comprising:

   a) the at least one computer (2) according to the preceding claim, wherein the program causes the computer (2) to perform the method steps of the method according to any one of claims 1 to 9;
   b) at least one electronic data storage device (3) storing the medical image subset data; and
   c) a program storage medium on which data defining the parameters and the architecture of the trained trainable algorithm are stored,

wherein the at least one computer (2) is operably coupled to

- the at least one electronic data storage device (3) for acquiring, from the at least one electronic data storage device (3), the medical image subset data, and for storing, in the at least one electronic data storage device (3), at least the distribution similarity data; and

the program storage medium for acquiring, from the program storage medium, the data defining the parameters and the architecture of the trainable algorithm.

## Patentansprüche

1. Computerimplementiertes Verfahren zur Bestimmung einer Ähnlichkeit zwischen medizinischen Bildern, wobei das Verfahren die folgenden Schritte umfasst:

Ausführen (S41) eines computerimplementierten Verfahrens zur Bestimmung dimensionalitätsreduzierter Darstellungen von Teilmengen eines medizinischen Bildes, das die folgenden Schritte umfasst:

a) medizinische Bildteilmengen-Daten werden erfasst (S31), die Teilmengen des medizinischen Bildes beschreiben, wobei die medizinischen Bildteilmengen-Daten ein Referenz-Medizinbild und ein Vergleichs-Medizinbild beschreiben;
b) Reduktionsdarstellungsdaten werden ermittelt (S32), indem die medizinische Bildteilmengen-Daten in einen trainierbaren Algorithmus eingegeben werden, der so konfiguriert ist, dass er die dimensionalitätsreduzierten Darstellungen ermittelt, und indem der trainierbare Algorithmus veranlasst wird, die dimensionalitätsreduzierten Darstellungen zu ermitteln,

wobei der trainierbare Algorithmus so konfiguriert wurde, dass er die dimensionsreduzierten Darstellungen durch Ausführen eines computerimplementierten Verfahrens zum Trainieren eines trainierbaren Algorithmus ermittelt, um eine Entsprechung zwischen einer Teilmenge eines medizinischen Bildes und einer dimensionsreduzierten Darstellung der Teilmenge zu ermitteln, wobei das Trainingsverfahren die folgenden Schritte umfasst:

c) Trainingsbild-Teilmengen-Daten werden erfasst (S21), die Teilmengen eines medizinischen Trainingsbildes beschreiben;
d) es werden Transformationsdaten ermittelt (S22), die eine Transformation zwischen dem Positionsreferenzsystem des Trainingsbildes, in dem Positionen im medizinischen Bild definiert sind, und einem Vergleichsreferenzsystem beschreiben, das sich vom Referenzsystem des Trainingsbildes unterscheidet;
e) es werden erste Abstandsdaten (S23) auf der Grundlage der Trainingsbild-Teilmengendaten und der Transformationsdaten ermittelt, wobei die ersten Abstandsdaten einen Abstand zwischen den Teilmengen im Vergleichsreferenzsystem beschreiben;
f) reduzierte Darstellungsdaten werden bestimmt (S24) durch Codierung der Trainingsbild-Teilmengen-Daten, wobei die reduzierten Darstellungsdaten eine dimensionalitätsreduzierte Darstellung jeder der Teilmengen in einem dimensionalitätsreduzierten Referenzsystem beschreiben, dessen Dimensionalität im Vergleich zur Dimensionalität des Referenzsystems des Trainingsbildes reduziert ist;
g) zweite Abstandsdaten werden (S25) auf der Grundlage der Daten der Reduktionsdarstellungsdaten ermittelt, wobei die zweiten Abstandsdaten einen Abstands zwischen den dimensionalitätsreduzierten Darstellungen im dimensionalitätsreduzierten Referenzsystem beschreiben;
h) Algorithmus-Parameterdaten werden ermittelt (S26), die Parameter des trainierbaren Algorithmus beschreiben, wobei die Algorithmus-Parameterdaten auf der Grundlage der ersten Abstandsdaten und der zweiten Abstandsdaten ermittelt werden, wodurch die Parameter so angepasst werden, dass die Darstellungen mit niedrigerer Dimension den Teilmengen des medizinischen Trainingsbildes entsprechen, wenn der Abstand zwischen den dimensionalitätsreduzierten Darstellungen dem Abstand zwischen den Teilmengen im Vergleichsreferenzsystem entspricht, wobei der trainierbare Algorithmus so konfiguriert ist, dass er eine Verlustfunktion berechnet, indem er einen Triplet-Netzwerk-Ansatz anwendet, um den Abstand zwischen den dimensionalitätsreduzierten Darstellungen im dimensionalitätsreduzierten Referenzsystem zu minimieren-reduzierten Referenzsystems zu minimieren, um zu bestimmen, ob die Darstellungen mit niedrigerer Dimension den Teilmengen des medizinischen Trainingsbildes entsprechen, wenn der Abstand zwischen den dimensionalitätsreduzierten Darstellungen dem Abstand zwischen den Teilmengen im Vergleichsreferenzsystem entspricht;

i) basierend auf den für das Referenz-Medizinbild bestimmten Teilmengen-Clusterdaten werden Referenz-Clusterverteilungsdaten ermittelt (S43), die eine Referenzverteilung der dimensionalitätsreduzierten Darstellungen der Teilmengen des Referenz-Medizinbilds auf anatomische Regionen beschreiben;

j) basierend auf den für das Vergleichs-Medizinbild ermittelten Teilmengen-Clusterdaten werdn Vergleichs-Clusterverteilungsdaten ermittelt (S44), die eine Vergleichsverteilung der dimensionalitätsreduzierten Darstellungen der Teilmengen des Vergleichs-Medizinbilds auf anatomische Regionen beschreiben;

k) basierend auf den Referenz-Clusterverteilungsdaten und den Vergleichs-Clusterverteilungsdaten werden Verteilungsähnlichkeitsdaten ermittelt (S45), die eine Ähnlichkeit zwischen der Referenzverteilung und der Vergleichsverteilung beschreiben, wobei festgestellt wird, dass das Referenz-Medizinbild und das Vergleichs-Medizinbild von demselben Patienten stammen, wenn die Ähnlichkeit hoch ist.

2. Verfahren nach dem vorhergehenden Anspruch, wobei das Bestimmen der Verteilungsähnlichkeitsdaten umfasst:

Erfassen von Differenzschwellenwertdaten, die einen vorbestimmten Wert der Differenz beschreiben;

Ermitteln von Verteilungsdifferenzdaten, die eine Differenz zwischen der Referenzverteilung und der Vergleichsverteilung beschreiben, auf der Grundlage der Referenz-Clusterverteilungsdaten und der Vergleichs-Clusterverteilungsdaten;

Ermitteln der Verteilungsähnlichkeitsdaten auf der Grundlage der Verteilungsdifferenzdaten und der Differenzschwellenwertdaten.

3. Verfahren nach dem vorhergehenden Anspruch, umfassend:

Vergleichen der Differenz mit dem Schwellenabstand; und

Feststellen, dass das Referenz-medizinische Bild und das Vergleichsmedizinische Bild einander ähnlich sind, wenn die Differenz nicht größer als der Schwellenabstand ist.

4. Verfahren nach Anspruch 2, wobei die Verteilungsähnlichkeitsdaten durch Ausführen einer k-Nächsten-Nachbarn-Suche ermittelt werden, die eine vorbestimmte Anzahl von Vergleichs-Medizinbildern ausgibt, die dem Referenzbild am nächsten liegen.

5. Verfahren nach dem vorhergehenden Anspruch, umfassend:

Erfassen von medizinischen Bilddaten, die das medizinische Bild beschreiben; und

Ermitteln von Bildteilmengen-Daten durch Extrahieren von Teilmengen aus den medizinischen Bilddaten

die Teilmengen extrahiert werden.

6. Verfahren nach einem der vorhergehenden Ansprüche, umfassend:
Ermitteln von Clusterdaten, die Cluster der niedrigdimensionalen Darstellungen der Teilmengen beschreiben.

7. Verfahren nach einem der vorhergehenden Ansprüche, wobei die Teilmengen aus den medizinischen Bilddaten extrahiert werden, indem mindestens eines der folgenden Kriterien angewendet wird:

- jede der Teilmengen umfasst nur Einheiten des medizinischen Bildes, die nicht mehr als einen vorbestimmten Abstand voneinander haben;
- nicht mehr als ein vorbestimmter Anteil jeder der Teilmengen enthält schwarzen Bildinhalt;
- jede der Teilmengen hat eine vorbestimmte Größe;
- eine Überlappung jeder der Teilmengen mit einer räumlich benachbarten Teilmenge überschreitet keinen vorbestimmten Prozentsatz der Größe jeder der Teilmengen.

8. Verfahren nach einem der vorstehenden Ansprüche, umfassend das Erfassen von Atlasdaten, die ein digitales Modell eines anatomischen Körperteils beschreiben, wobei das Vergleichsreferenzsystem Positionen im digitalen Modell beschreibt, wobei die Teilmengen durch Anwenden eines Clusteranalysealgorithmus aus den medizinischen Bilddaten extrahiert werden.

9. Verfahren nach dem vorstehenden Anspruch, wobei die Klassen im digitalen Modell segmentierte anatomische Strukturen definieren.

**10.** Programm, das, wenn es auf einem Computer (2) ausgeführt oder auf einen Computer (2) geladen wird, bewirkt, dass der Computer (2) die Verfahrensschritte des Verfahrens gemäß einem der vorstehenden Ansprüche ausführt.

**11.** Programmspeichermedium, auf dem das Programm gemäß dem vorstehenden Anspruch gespeichert ist.

**12.** Datenträgersignal, das das Programm gemäß Anspruch 10 überträgt.

**13.** Computer (2) mit mindestens einem Prozessor und einem Speicher, wobei das Programm gemäß Anspruch 10 auf dem mindestens einen Prozessor läuft oder in den Speicher des Computers (2) geladen ist.

**14.** System (1) zur Bestimmung einer Ähnlichkeit zwischen medizinischen Bildern, umfassend:

a) den mindestens einen Computer (2) gemäß dem vorstehenden Anspruch, wobei das Programm den Computer (2) veranlasst, die Verfahrensschritte des Verfahrens gemäß einem der Ansprüche 1 bis 9 auszuführen;
b) mindestens ein elektronisches Datenspeichergerät (3), das die medizinischen Bildteilmengen-Daten speichert; und
c) ein Programmspeichermedium, auf dem Daten gespeichert sind, die die Parameter und die Architektur des trainierten, trainierbaren Algorithmus definieren,

wobei der mindestens eine Computer (2) funktionsfähig gekoppelt ist mit

- dem mindestens einen elektronischen Datenspeichergerät (3) zum Erfassen der medizinischen Bildteilmengen-Daten aus dem mindestens einen elektronischen Datenspeichergerät (3) und zum Speichern zumindest der Verteilungsähnlichkeitsdaten in dem mindestens einen elektronischen Datenspeichergerät (3); und

dem Programmspeichermedium, um von dem Programmspeichermedium die Daten zu erfassen, die die Parameter und die Architektur des trainierbaren Algorithmus definieren.

**Revendications**

**1.** Procédé mis en œuvre par ordinateur visant à déterminer une similarité entre des images médicales, le procédé comprenant les étapes suivantes :

l'exécution (S41) d'un procédé mis en œuvre par ordinateur visant à déterminer des représentations à dimensionnalité réduite de sous-ensembles d'une image médicale, comprenant les étapes suivantes :

a) l'acquisition (S31) de données de sous-ensembles d'image médicale décrivant des sous-ensembles de l'image médicale, les données de sous-ensembles d'image médicale décrivant une image médicale de référence et une image médicale comparative,
b) la détermination (S32) de données de représentation réduite, par introduction des données de sous-ensembles d'image médicale dans un algorithme entraînable conçu pour déterminer les représentations à dimensionnalité réduite et par exécution de l'algorithme entraînable pour déterminer les représentations à dimensionnalité réduite,

l'algorithme entraînable ayant été conçu pour déterminer les représentations à dimensionnalité réduite par exécution d'un procédé mis en œuvre par ordinateur visant à entraîner un algorithme entraînable pour déterminer une correspondance entre un sous-ensemble d'une image médicale et une représentation à dimensionnalité réduite du sous-ensemble, le procédé d'entraînement comprenant les étapes suivantes :

c) l'acquisition (S21) de données de sous-ensembles d'image d'entraînement décrivant des sous-ensembles d'une image médicale d'entraînement,
d) la détermination (S22) de données de transformation décrivant une transformation entre le système de référence positionnel de l'image d'entraînement dans lequel des positions dans l'image médicale sont définies et un système de référence comparatif différent du système de référence d'image d'entraînement,
e) la détermination (S23) de premières données de distance en fonction des données de sous-ensembles

EP 4 364 102 B1

d'image d'entraînement et des données de transformation, les premières données de distance décrivant une distance entre les sous-ensembles dans le système de référence comparatif,

f) la détermination (S24) de données de représentation réduite par encodage des données de sous-ensembles d'image d'entraînement, les données de représentation réduite décrivant une représentation à dimensionnalité réduite de chacun des sous-ensembles dans un système de référence à dimensionnalité réduite dont la dimensionnalité est réduite par rapport à la dimensionnalité du système de référence d'image d'entraînement,

g) la détermination (S25) de deuxièmes données de distance en fonction des données de représentation réduite, les deuxièmes données de distance décrivant une distance entre les représentations à dimensionnalité réduite dans le système de référence à dimensionnalité réduite,

h) la détermination (S26) de données de paramètres d'algorithme décrivant des paramètres de l'algorithme entraînable, les données de paramètres d'algorithme étant déterminées en fonction des premières données de distance et des deuxièmes données de distance, ajustant ainsi les paramètres pour rendre compte que les représentations à dimensionnalité réduite correspondent aux sous-ensembles de l'image médicale d'entraînement si la distance entre les représentations à dimensionnalité réduite correspond à la distance entre les sous-ensembles dans le système de référence comparatif, l'algorithme entraînable étant conçu pour calculer une fonction de perte par application d'une approche de réseau triplet pour minimaliser la distance entre les représentations à dimensionnalité réduite dans le système de référence à dimensionnalité réduite pour déterminer si les représentations à dimensionnalité réduite correspondent aux sous-ensembles de l'image médicale d'entraînement si la distance entre les représentations à dimensionnalité réduite correspond à la distance entre les sous-ensembles dans le système de référence comparatif,

i) la détermination (S43), en fonction des données de cluster de sous-ensembles déterminées pour l'image médicale de référence, de données de distribution de cluster de référence décrivant une distribution de référence des représentations à dimensionnalité réduite des sous-ensembles de l'image médicale de référence sur des régions anatomiques,

j) la détermination (S44), en fonction des données de cluster de sous-ensembles déterminées pour l'image médicale comparative, de données de distribution de cluster comparative décrivant une distribution comparative des représentations à dimensionnalité réduite des sous-ensembles de l'image médicale comparative sur des régions anatomiques,

k) la détermination (S45), en fonction des données de distribution de cluster de référence et des données de distribution de cluster comparative, de données de similarité de distribution décrivant une similarité entre la distribution de référence et la distribution comparative, étant entendu qu'il est déterminé que l'image médicale de référence et l'image médicale comparative proviennent du même patient si la similarité est élevée.

2. Procédé selon la revendication précédente, dans lequel la détermination des données de similarité de distribution comprend :

l'acquisition de données de seuil de différence décrivant une valeur prédéterminée de la différence,
la détermination, en fonction des données de distribution de cluster de référence et des données de distribution de cluster comparative, de données de différence de distribution décrivant une différence entre la distribution de référence et la distribution comparative,
la détermination des données de similarité de distribution en fonction des données de différence de distribution et des données de seuil de différence.

3. Procédé selon la revendication précédente, comprenant :

la comparaison de la différence à la distance seuil, et
la détermination que l'image médicale de référence et l'image médicale comparative sont similaires l'une à l'autre si la différence n'est pas supérieure à la distance seuil.

4. Procédé selon la revendication 2, dans lequel les données de similarité de distribution sont déterminées par exécution d'une recherche des k plus proches voisins qui produit un nombre prédéterminé d'images médicales comparatives qui sont les plus proches de l'image de référence.

5. Procédé selon la revendication précédente, comprenant :

l'acquisition de données d'image médicale décrivant l'image médicale, et

la détermination de données de sous-ensembles d'image par extraction des sous-ensembles à partir de données d'image médicale.

6. Procédé selon l'une quelconque des revendications précédentes, comprenant :
la détermination de données de clusters décrivant des clusters de représentations à dimensionnalité réduite des sous-ensembles.

7. Procédé selon l'une quelconque des revendications précédentes, dans lequel les sous-ensembles sont extraits des données d'image médicale par application d'au moins l'un des critères suivants :

- chacun des sous-ensembles comprend uniquement des unités de l'image médicale qui ne présentent pas plus d'une distance prédéterminée entre elles,
- pas plus d'une quantité prédéterminée de chacun des sous-ensembles comprend un contenu d'image noire,
- chacun des sous-ensembles présente une taille prédéterminée,
- un chevauchement de chacun des sous-ensembles avec un sous-ensemble spatialement voisin ne dépasse pas un pourcentage prédéterminé de la taille de chacun des sous-ensembles.

8. Procédé selon l'une quelconque des revendications précédentes, comprenant l'acquisition de données d'atlas décrivant un modèle numérique d'une partie corporelle anatomique, le système de référence comparatif décrivant des positions dans le modèle numérique, les sous-ensembles étant extraits des données d'image médicale par application d'un algorithme d'analyse de cluster.

9. Procédé selon la revendication précédente, dans lequel les classes définissent des structures anatomiques segmentées dans le modèle numérique.

10. Programme qui, lorsqu'il est exécuté sur un ordinateur (2) ou lorsqu'il est chargé sur un ordinateur (2), amène l'ordinateur (2) à effectuer les étapes du procédé selon l'une quelconque des revendications précédentes.

11. Support de stockage de programme sur lequel est stocké le programme selon la revendication précédente.

12. Signal porteur de données portant le programme selon la revendication 10.

13. Ordinateur (2) comprenant au moins un processeur ainsi qu'une mémoire, le programme selon la revendication 10 étant exécuté sur l'au moins un processeur ou étant chargé dans la mémoire de l'ordinateur (2).

14. Système (1) de détermination d'une similarité entre des images médicales, comprenant :

a) l'au moins un ordinateur (2) selon la revendication précédente, le programme amenant l'ordinateur (2) à effectuer les étapes du procédé selon l'une quelconque des revendications 1 à 9,
b) au moins un dispositif électronique de stockage de données (3) sur lequel sont stockées les données de sous-ensembles d'image médicale, et
c) un support de stockage de programme sur lequel sont stockées des données définissant les paramètres et l'architecture de l'algorithme entraînable ayant été entraîné ;
l'au moins un ordinateur (2) étant couplé de manière fonctionnelle

- à l'au moins un dispositif électronique de stockage de données (3) pour l'acquisition, à partir de l'au moins un dispositif électronique de stockage de données (3), des données de sous-ensembles d'image médicale, et pour le stockage, dans l'au moins un dispositif électronique de stockage de données (3), d'au moins les données de similarité de distribution, et
- au support de stockage de programme pour l'acquisition, à partir du support de stockage de programme, des données définissant les paramètres et l'architecture de l'algorithme entraînable.

**Fig. 1**

**Fig. 2a**

S51
acquire training
image subset data

S52
determine
transformation data

S53
determine first
distance data

*repeat*

S54: apply algorithm
for determining embeddings

S55: Determine second
distance data
in the low dimensional latent space

S56: Update parameters of algorithm
used for determining embeddings

**Fig. 2b**

S31

acquire medical image subset data

S32
determine reduced
representation data

**Fig. 3**

S41
execute method of Fig. 3 on
reference medical image

S42
execute method of Fig. 3 on
comparative medical image

S43
determine reference cluster
distribution data

S44

determine comparative cluster
distribution data

S45
determine distribution
similarity data

**Fig. 4**

**Fig. 5**

| Input images | Dimensionality Reduction | Embeddings (Latent Space) | Distance in Latent Space |
|---|---|---|---|

d = 1.5

d = 0.1

**Fig. 6**

**Fig. 7**

**Fig. 8**

**Fig. 9**

EP 4 364 102 B1

**Fig. 10**

**Second dimension of the latent space***)

**First dimension of the latent space***)

- Embedding of all patches in the database
- Embedding of the query patch
- - - Distance to the n obtained similar patches from the database that are closest to the query patch in the latent space

**Fig. 11**

**Second dimension of the latent space***)

**First dimension of the latent space***)

- Embeddings of all patches in the database
- Clusters of patches with similar embeddings

**Fig. 12**

13

**Fig. 13**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2010329529 A1

### Non-patent literature cited in the description

- Perception-Based Visualization of Manifold-Valued Medical Images Using Distance-Preserving Dimensionality Reduction. **GHASSAN HAMARNET et al.** IEEE TRANSACTIONS ON MEDICAL IMAGING. IEEE, 01 July 2022, vol. 30, 1314-1327
- **VISWANATH, S. et al.** A Meta-Classifier for Detecting Prostate Cancer by Quantitative Integration of In Vivo Magnetic Resonance Spectroscopy and Magnetic Resonance Imaging. *Medical Imaging 2008: Computer-Aided Diagnosis, proceedings of SPIE*, 2008, vol. 6915, 69153
- **TIWARI PALLAVI et al.** Consensus-Locally Linear Embedding (C-LLE): Application to Prostate Cancer Detection on Magnetic Resonance Spectroscopy. *ADVANCES IN BIOMETRICS: INTERNATIONAL CONFERENCE, ICB 2007*, 06 September 2008
- PROCEEDINGS; [LECTURE NOTES IN COMPUTER SCIENCE; LECT.NOTES COMPUTER. SPRINGER, 330-338
- **ANTONIO CRIMINISI** ; **JAMIE SHOTTON** ; **ENDER KONUKOGLU**. *Decision Forests: A Unified Framework for Classification, Regression, Density Estimation, Manifold Learning and Semi-Supervised Learning*, 2011, https://www.microsoft.com/en-us/research/wp-content/uploads/2016/02/CriminisiForests_FoundTrends_2011.pdf
- **I. GOODFELLOW** ; **Y. BENGIO** ; **A. COURVILLE**. *Deep learning, chapter convolutional networks.*, 2016, http://www.deeplearningbook.org

- **J. WU**. *Introduction to convolutional neural networks.*, https://pdfs.semanticscholar.org/450-c/a19932fcef1ca6d0442cbf52fec38fb9d1e5.pdf.
- *Common loss functions in machine learning.*, 22 August 2019, https://towardsdatascience.com/common-loss-functions-in-machine-learning-46af0ffc4d23.
- **ALEX KRIZHEVSKY** ; **ILYA SUTSKEVER** ; **GEOFFREY E. HINTON**. *Imagenet classification with deep convolutional neural networks.*, http://papers.nips.cc/paper/4824-imagenet-classification-with-deep-convolutional-neural-networks.pdf.
- **S. REN** ; **K. HE** ; **R. GIRSHICK** ; **J. SUN**. *Faster r-cnn: Towards real-time object detection with region proposal networks.*, https://arxiv.org/pdf/1506.01497.pdf
- **S.-E. WEI** ; **V. RAMAKRISHNA** ; **T. KANADE** ; **Y. SHEIKH**. *Convolutional pose machines.*, https://arxiv.org/pdf/1602.00134.pdf
- **JONATHAN LONG** ; **EVAN SHELHAMER** ; **TREVOR DARRELL**. *Fully convolutional networks for semantic segmentation.*, https://www.cv-foundation.org/openaccess/content_cvpr_2015/papers/Long_-Fully_Convolutional_Networks_2015_CVPR_paper.pdf.
- **HOFFER, E. et al.** Deep Metric Learning using Triplet Network. *arXiv:1412.6622*